# EUROPÄISCHE PATENTSCHRIFT

(11) **EP 4 149 885 B1**
(45) Veröffentlichungstag und Bekanntmachung des Hinweises auf die Patenterteilung: **02.04.2025**
(21) Anmeldenummer: 21726599.0
(22) Anmeldetag: 11.05.2021
(51) Int. Cl.: C01B 33/158, B01J 13/00

(54) **VERFAHREN ZUR HERSTELLUNG VON AEROGELEN UND MIT DIESEM ERHÄLTLICHE AEROGELE**
METHOD FOR PRODUCING AEROGELS AND AEROGELS OBTAINED USING SAID METHOD
PROCÉDÉ DE FABRICATION D'AÉROGELS ET AÉROGELS POUVANT ÊTRE OBTENUS PAR CE PROCÉDÉ

(30) Priorität: 13.05.2020 DE 102020112973
(43) Veröffentlichungstag der Anmeldung: 22.03.2023
(73) Patentinhaber: Fraunhofer-Gesellschaft zur Förderung der angewandten Forschung e.V., 80686 München (DE)
(72) Erfinder: HINTEMANN, Damian, 48703 Stadtlohn (DE); MÖLDERS, Nils, 45149 Essen (DE); RENNER, Manfred, 45130 Essen (DE); SENGESPEICK, Andreas, 46047 Oberhausen (DE); WEIDNER, Eckhard, 44795 Bochum (DE)
(86) Internationale Anmeldenummer: PCT/EP2021/062439
(87) Internationale Veröffentlichungsnummer: WO 2021/228828

(56) Entgegenhaltungen:
- DE-A1- 102015 117 035
- DE-A1- 19 801 004
- US-A1- 2017 014 792
- MONTES A ET AL: "Silica microparticles precipitation by two processes using supercritical fluids", THE JOURNAL OF SUPERCRITICAL FLUIDS, ELSEVIER, AMSTERDAM, NL, vol. 75, 29 December 2012 (2012-12-29), pages 88 - 93, XP028980000, ISSN: 0896-8446, DOI: 10.1016/J.SUPFLU.2012.12.017
- MONER-GIRONA M ET AL: "Sol-gel route to direct formation of silica aerogel microparticles using supercritical solvents", JOURNAL OF SOL-GEL SCIENCE AND TECHNOLOGY, SPRINGER, NEW YORK, NY, US, vol. 26, no. 1-3, 1 January 2003 (2003-01-01), pages 645 - 649, XP002387364, ISSN: 0928-0707

## Beschreibung

Die vorliegende Erfindung betrifft das technische Gebiet der Herstellung von Aerogelen. Insbesondere betrifft die vorliegende Erfindung ein Verfahren zur Herstellung eines Aerogels mittels eines Sol-Gel-Verfahrens.

Weiterhin betrifft die vorliegende Erfindung Aerogele, welche nach dem erfindungsgemäßen Verfahren erhältlich sind, sowie ihre Verwendung, insbesondere als oder in Isolationsmaterialien.

Aerogele sind hochporöse Festkörper, deren Volumen bis zu 99,98 % aus Poren bestehen können. Aerogele weisen üblicherweise dendritische Strukturen mit einer starken Verästelung der Partialketten auf, so dass sehr viele Zwischenräume, insbesondere in Form von offenen Poren, gebildet werden. Die Ketten besitzen eine Vielzahl von Kontaktstellen, so dass eine stabile, schwammartige Struktur gebildet wird. Die Porengröße liegt üblicherweise im Nanometerbereich und die innere Oberfläche kann bis zu 1.000 m²/g oder mehr betragen. Aerogele können aus einer Vielzahl von Materialien, wie beispielsweise Siliciumdioxid, Kunststoff oder Kohlenstoff, sowie natürlichen organischen Polymeren, wie beispielsweise Alginaten, oder Metalloxiden bestehen.

Aerogele werden aufgrund der hohen Porosität oftmals als Isoliermaterialien, beispielsweise zu Wärmedämmzwecken, oder als Filtermaterialien eingesetzt. Gleichermaßen finden Aerogele auch als Speichermaterialien, beispielsweise für Flüssigkeiten oder Gase, Anwendung.

Bei Aerogelen handelt es sich um nanostrukturierte, offenporige Festkörper, welche üblicherweise über einen Sol-Gel-Prozess hergestellt werden.

Aerogele werden in der Regel durch Trocknung eines gallertartigen Gels, zumeist kondensierter Kieselsäure, hergestellt. Die mit Kieselsäuren und ähnlichen Ausgangsstoffen wie Kieselsäuresolen, Silanhydrolysaten oder Silikaten erhältlichen Aerogele weisen SiO₂-Struktureinheiten auf und werden oftmals als Silica-Aerogele - auch Silika-Aerogele genannt - bezeichnet. Die erstmalige Synthese von Silica-Aerogelen gelang Steven Kistler im Jahre 1931/1932. Er entwickelte als erster eine Methode, Gele zu trocknen, ohne dass diese dabei eine Schrumpfung aufwiesen (Kistler S. S., The Journal of Physical Chemistry 1932, 36(1): Coherent expanded Aerogels, S. 52-64). Bei der von Kistler entwickelten Methode wird Wasserglas als Ausgangsstoff verwendet, aus welchem in einem ersten Schritt durch Ansäuern mit einer Mineralsäure ein Silica-Hydrogel erhalten wird. Dieses Gel wird im nächsten Schritt durch Waschen von Alkalimetallionen befreit. Das im Hydrogel enthaltene Wasser wird danach vollständig gegen Ethanol oder Methanol ausgetauscht. Anschließend erfolgt die überkritische Trocknung des entstandenen Alkogels im Autoklav.

In der Zwischenzeit wurden weitere Verfahren entwickelt, wie beispielsweise das in der DE 18 11 353 A beschriebene. Die DE 18 11 353 A offenbart ein Verfahren zur Erzeugung von Silica-Aerogelen, wobei Tetraethoxysilan (TEOS) in Methanol oder Ethanol mit einer genau dosierten Menge Wasser und einem Katalysator hydrolysiert wird. Bei der Hydrolyse bildet sich unter Alkohol- und Wasserabspaltung ein SiO₂-Gel in Form eines Alkogels aus. Das Alkogel wird anschließend überkritisch im Autoklav getrocknet. Nach diesem Verfahren lassen sich auch organische Aerogele aus Melaminformaldehydharzen und Resorzinolformaldehydharzen herstellen. Bei den überkritischen Trocknungstechniken wird das zu trocknende Gel Temperatur- und Druckbedingungen ausgesetzt, bei denen mindestens der kritische Punkt des verwendeten Lösemittels erreicht wird.

Die Nachteile derartiger überkritischer Trocknungsverfahren, welche von überkritischen Bedingungen des eingesetzten Lösemittels ausgehen, sind die Temperatur- und Druckbedingungen sowie eine diskontinuierliche Betriebsweise. Bei der Trocknung von wasserhaltigen Gelen sind beispielsweise Temperaturen von mindestens 370 °C und Drücke von mindestens 220 bar erforderlich. Bei der Trocknung von methanolhaltigen Gelen sind Temperaturen von mindestens 240 °C und Drücke von mindestens 81 bar erforderlich.

Eine Alternative zu diesem überkritischen Trocknungsverfahren stellt die Verwendung von verdichtetem Kohlendioxid dar. Ein Verfahren zur Trocknung mit überkritischem Kohlendioxid wird beispielsweise in der EP 171 722 A offenbart. Hierbei wird vor der überkritischen Trocknung das organische Lösemittel gegen flüssiges Kohlendioxid ausgetauscht. Die überkritische Trocknung mit CO₂ erfolgt dann bei wesentlich geringeren Temperaturen, beispielsweise bei der kritischen Temperatur von 31,1 °C und dem kritischen Druck von 73,9 bar des Kohlendioxids.

Aerogele werden industriell oftmals in Anlehnung an das Cabot-Verfahren hergestellt. Dieses ist beispielsweise in der DE 19 648 798 A und der DE 69 903 913 T2 wiedergegeben. Hierzu wird verdünntes Natronwasserglas mit Salzsäure bei 60 bis 80 °C umgesetzt, wobei die Gelierzeit, d. h. die Zeit bis zur Gelbildung, auf wenige Minuten eingestellt werden kann. Für die Verfestigung und Reifung des Gels wird das Gel anschließend bei 80 bis 100 °C temperiert. Die Reifungszeit wird mit 30 Minuten angegeben. Während des Reifungsprozesses oder anschließend erfolgt ein Waschen des Gels, bis das Waschwasser elektrolytfrei ist.

Im Anschluss erfolgt die Silanisierung des Hydrogels, um eine unterkritische Trocknung zu ermöglichen. Als Silanisierungsmittel kommt Trimethylchlorsilan zum Einsatz. Trimethylchlorsilan reagiert zum Großteil mit dem vorhandenen Wasser im Hydrogel zu Trimethylsilanol und kondensiert weiter zum Hexamethyldisiloxan, welches in die Poren eingelagert wird und das Wasser teilweise verdrängt.

Zu beachten ist hierbei, dass das eingesetzte Silanisierungsmittel in sehr großen Mengen hinzugegeben wird. So werden zum Beispiel 100 g Hydrogel mit 140 ml Trimethylchlorsilan umgesetzt. Nur bei diesem Verhältnis von Hydrogel mit Trimethylchlorsilan wird eine teilweise Umsetzung der Hydroxydgruppen am Silicium erreicht. Als alternative Silanisierungsmittel werden Hexamethyldisiloxan und Salzsäure im Gasstrom eingesetzt. Hierbei kommt es zu einer teilweisen Rückreaktion des Hexamethyldisiloxans zum Trimethylchlorsilan, welches dann mit den Hydroxygruppen des Siliciums reagieren kann.

Betrachtet man die molaren Verhältnisse an HCI und Hexamethyldisiloxan in den Beispielen der genannten Patente bzw. Patentanmeldungen, so ergibt sich, dass Hexamethyldisiloxan im fünf- bis sechsfachen Überschuss hinzugegeben wird und nur ein kleiner Teil des eingesetzten Hexamethyldisiloxans zum Trimethylchlorsilan reagieren kann. Dies zeigt die Wichtigkeit der Einlagerung des Hexamethyldisiloxans in den Poren des Lyogels. Nur so kann eine unterkritische Trocknung durchgeführt werden. Die Trocknung selbst erfolgt anschließend im 200 °C heißen Stickstoffstrom.

Im Aerogel-Handbook (M. A. Aergerter et al., Aerogels Handbook, Advances in Sol-Gel Derived Materials and Technologies, 2011, S. 120) wird genauer auf die Bedeutung des molaren Verhältnisses an Silanisierungsmitteln zu SiO₂-Netzwerk eingegangen. Der Hydrophobierungsschritt unter Verwendung einer großen Menge von Trimethylchlorsilan, welches giftig, brennbar und korrosiv ist, stellt den aufwendigsten Verfahrensschritt bei der Herstellung von Aeorgelen nach dem Cabot-Verfahren dar.

Bei Trocknungsverfahren zeigt sich weiterhin oftmals, dass ein Lösemittelaustausch, insbesondere von polaren Lösemitteln hin zu wenig polaren Lösemitteln, wichtig ist, damit die Trocknung gelingt.

Aus den Untersuchungen von Kistler zu Natronwasserglas-basierten Aerogelen ist bekannt, dass der Lösemittelaustausch von Wasser zu Ethanol keine signifikante Änderung der Porengeometrie verursacht. Dieses Ergebnis ist unabhängig davon, ob der Lösemittelaustausch in einem Schritt oder in mehreren Stufen mit ansteigendem Ethanolgehalt durchgeführt wird. Für die dort praktizierte direkte überkritische Trocknung von SiO₂-Gelen aus Ethanol genügt ein Massenbruch an Ethanol von 95 Gew.%. Für die überkritische Trocknung mittels CO₂ ist hingegen kein Wert bekannt.

Der Lösemittelaustausch von Wasser zu Ethanol wird von Gurikov et al. unter Einfluss von verdichtetem CO₂ untersucht. Die verwendeten Gele bestehen aus Alginat und werden mittels einer CO₂-induzierten Gelierung hergestellt. Die Proben weisen einen Durchmesser von 10 bis 12 mm auf und werden in einem vorgeheizten Autoklav positioniert und mit überkritischem CO₂ (120 bar, 313 K) umgeben. Danach werden in mehreren Stufen Mischungen aus Wasser und Ethanol in den Autoklaven gepumpt und der Lösemittelaustausch für jeweils 2,5 Stunden pro Stufe durchgeführt, wobei ein Anteil an Ethanol von 30 Gew.% in der ersten Stufe, 60 Gew.% in der zweiten Stufe und 90 Gew.% in der dritten Stufe erreicht wird. Die Gele werden anschließend mit 25 Gew.% Ethanol in CO₂ umspült, um das Wasser vollständig aus den Poren zu extrahieren, ehe die Gele über 3 Stunden überkritisch getrocknet werden. Der Fortschritt des Lösemittelaustausches wird anhand der aus der Dichte des Lösemittels berechneten Zusammensetzung analysiert. Hierzu werden jeweils 5 ml Proben aus dem Autoklav entnommen. Unter den gegebenen Bedingungen wurde die für die jeweiligen Stufen des Lösemittelaustausches benötigte Zeit von 12 Stunden auf 2,5 Stunden reduziert.

Durch die Verwendung des überkritischen Kohlendioxids während des Lösemittelaustausches wird die benötigte Trocknungszeit zusätzlich von 6 Stunden auf 3 Stunden reduziert.

Die Dichte der Gele liegt nach dem Lösemittelaustausch unter Einfluss von verdichtetem CO₂ bei 0,021 g/cm³, die spezifische Oberfläche nach BET bei 538 m²/g und das Porenvolumen nach BJG bei 5,96 cm³/g. Die erhaltenen Aerogele weisen ähnliche Eigenschaften wie die über einen Lösemittelaustausch bei Umgebungsbedingungen hergestellten Vergleichsproben auf. Ein direkter Einfluss des Lösemittlaustausches unter Druck auf die Eigenschaften der hergestellten Aerogele lässt sich aus den vorhandenen Daten nicht ableiten, da für die unterschiedlichen Prozesse unterschiedliche Synthesebedingungen verwendet werden.

Neben zuvor beschriebener Herausforderung der Stabilisierung des Gels während des Trocknungsprozesses stellen ein weiteres Problem bei der Herstellung von Aerogele, insbesondere Silica-Aerogelen, die langen Prozesszeiten dar. Diese verteuern die Aerogelherstellung und verhindern somit den Einsatz von Aerogelen in einer Vielzahl von Anwendungen, für welche Aerogele aufgrund ihres physikalischen Eigenschaftsprofils geeignet wären. So betragen die jeweiligen Prozesszeiten für die einzelnen Verfahrensschritte bei der Bildung von Silica-Aerogelen aus Tetraethylorthosilicat (TEOS) im Einzelnen:
- Hydrolyse- und Kondensationszeiten mindestens 8 Stunden (vgl. A. A. Tweij Wesam, Temperature Influence on the Gelation Process of Tetraethylorthosilicate using Sol-Gel Techique, Iraqi Journal of Science 2009)
- Alterungszeiten des Gels betragen zwischen 6 und 72 Stunden (vgl. Einarsrud, M.-A., Kirkedelen, M.B., Nilsen, E., Mortensen, K., Samseth, J., Structural Development of Silicagels aged in TEOS, Journal of Non-Cryst Solids 231, 1998, S. 10-16)
- Überkritischen Waschzeiten / Lösemittelaustausch ca. 24 Stunden pro Waschzyklus (vgl. Kerstin Quarch, Produktgestaltung an kolloidalen Agglomeraten und Gelen, Gelierung und Fragmentierung an anorganischen Siliciumdioxid, Dissertation, KIT, 2010)
- Die überkritischen Trocknungszeiten sind stark abhängig vom vorangehenden Lösemittelaustausch und der Probengröße

Eine deutliche Verbesserung bringt die von der Eidgenössischen Material- und Prüfungsanstalt (EMPA) entwickelte Eintopfmethode, deren Einzelschritte folgende Zeitdauer benötigen:
- Die Zeit für die Gelbildung und Alterung beträgt durch Einsatz von Hexamethyldisilazan (HDMSO), Ammoniak, Waser, Ethanol und TEOS ca. 2 Stunden.
- Die Hydrophobierung des feuchten Gels wird mittels einer Mischung aus HCI und HDMSO über einen Zeitraum von 1 Stunde vorgenommen.
- Die überkritische Trocknungszeit beträgt ca. 1 Stunde.

Die Gesamtprozesszeiten betragen somit zwischen 4 und 6 Stunden.

Aber auch diese Prozesszeiten stellen die großindustrielle Herstellung immer noch vor große Herausforderungen, wobei insbesondere bei der Hydrophobierung auch mit großen Überschüssen an Hydrophobierungsmitteln gearbeitet werden muss, um die notwendige Hydrophobierung für den Lösemittelaustausch zu erhalten.

Ein weiteres Problem, welches sämtlichen der vorgenannten Verfahren zur Herstellung von Aerogel gemein ist, ist, dass üblicherweise undefinierte Partikel ohne regelmäßige äußere Form erhalten werden, welche sich nur schlecht in loser Schüttung oder auch zur Einarbeitung in Dämmputzsysteme verwenden lassen. Diese unregelmäßigen Partikel sind mechanisch deutlich weniger belastbar und bilden schlechter dichte Kugelpackungen als dieses für regelmäßige, insbesondere sphärische Partikel zu erwarten wäre. Aus diesem Grund bleibt die Effektivität von Aerogelen in der Praxis oftmals hinter den berechneten Werten zurück.

Die wissenschaftliche Veröffentlichung A. Montes et al., Silica microparticles precipitation by two processes using supercritical fluids, J. of supercritical fluids, 75, 2013, Seiten 88 bis 93 betrifft die Herstellung von Silica-Aerogelmikropartikeln in überkritischen Medien. Die Silica-Aerogelmikropartikel werden dabei über zwei unterschiedliche Verfahren hergestellt: Zum einen in Ethanol als überkritischem Fluid und zum anderen durch einen überkritischen Antisolvens-Prozess in überkritischem Kohlendioxid.

Weiter beschreibt die wissenschaftliche Veröffentlichung M. Moner-Girona et al., Sol-gel route to direct formation of silica aerogel microparticles using supercritical solvents, Journal of Sol-Gel Science and Technology, 26, 2003, Seiten 645 bis 649 Verfahren zur Herstellung von Silica-Aerogel-Mikropartikeln in überkritischen Lösemitteln. Zum einen können Mischungen aus Aceton, Tetramethoxysilan und Wasser in einen Autoklaven eingebracht und überkritische Bedingungen des Acetons eingestellt werden, wodurch Gelpartikel erhalten werden. In einem zweiten Verfahren wird Tetraethoxysilan als Precursor gemeinsam mit Ameisensäure als Kondensations- bzw. Hydrolyselösung in überkritisches CO₂ eingesprüht. Die Precursoren und die Hydrolyselösungen werden zwischen 1 und 48 Stunden bei überkritischen Bedingungen belassen.

Die deutsche Patentanmeldung DE 10 2015 117035 A1 betrifft poröse Kompositpartikel für die Wärmedämmung, umfassend mindestens ein poröses Trägermaterial, wobei die Poren des porösen Trägermaterials ein Aerogel aufweisen.

Die Patentanmeldung US 2017/014792 A1 betrifft ein Verfahren zur Herstellung von Aerogelen, umfassend die aufeinanderfolgenden Schritte: a) Bildung oder Gießen eines Sols in einem Reaktor, gegebenenfalls in Gegenwart eines Verstärkungsmaterials und/oder eines Zusatzstoffs, b) vollständiges Gelieren des Sols in ein Lyogel; c) optional Hydrophobierung des Lyogels, was zu einem hydrophobierten Lyogel führt; d) Trocknen des gegebenenfalls hydrophobierten Lyogels, um ein Aerogel zu erhalten. Das Verfahren ist dadurch gekennzeichnet, dass der Schritt b) eine dielektrische Erwärmung durch Mikrowellen oder hochfrequente elektromagnetische Strahlung umfasst, wodurch ein Temperaturanstieg induziert wird.

Die deutsche Patentanmeldung DE 198 01 004 A1 betrifft darüber hinaus die Herstellung sphärischer Lyogele, welche die Schritte umfasst: (a) Übertragen eines Lyosols in Silylierungsmittel, in denen das Lyosol unlöslich ist; und (b) Gelieren des resultierenden kugelförmigen Lyosols in Silylierungsmitteln, in denen es ebenfalls unlöslich ist.

Es fehlt somit im Stand der Technik weiterhin an einem System, um reproduzierbar Aerogele mit deutlich verkürzten Prozesszeiten herzustellen, wodurch eine kontinuierliche oder quasi-kontinuierliche Herstellung mit verringerten Kosten möglich wird. Darüber hinaus ist es gleichfalls nicht möglich, in industriellem Maßstab und reproduzierbar Aerogele mit definierter geometrischer Struktur herzustellen. Für viele Anwendungen werden insbesondere kugelförmige, d. h. sphärische Aerogelpartikel bevorzugt, da diese eine deutlich höhere mechanische Belastbarkeit aufweisen dürften.

Gleichermaßen ist es derzeit noch nicht möglich, Aerogelpartikel mit vorgewählten Partikelgrößen gezielt herzustellen.

Es ist nunmehr Aufgabe der vorliegenden Erfindung, die mit dem geschilderten Stand der Technik verbundenen Nachteile auszuräumen, zumindest jedoch abzuschwächen.

Insbesondere ist eine Aufgabe der vorliegenden Erfindung darin zu sehen, ein Verfahren zur Herstellung von Aerogelpartikeln bereitzustellen, welches mit deutlich kürzeren Prozesszeiten und vorzugsweise kontinuierlich oder quasi-kontinuierlich durchgeführt werden kann.

Eine weitere Aufgabe der vorliegenden Erfindung ist darin zu sehen, Aerogele mit definierten Eigenschaften, insbesondere auch definierter äußerer Gestalt und definierter Partikelgröße gezielt herstellen zu können.

Darüber hinaus ist eine weitere Aufgabe der vorliegenden Erfindung, ein Aerogel zur Verfügung zu stellen, welches mechanisch belastbar ist und sich insbesondere zur Verwendung in Dämmstoffen eignet.

Die zuvor gestellte Aufgabenstellung wird erfindungsgemäß durch ein Verfahren nach Anspruch 1 gelöst; weitere, vorteilhafte Weiterbildungen und Ausgestaltungen des erfindungsgemäßen Verfahrens sind Gegenstand der diesbezüglichen Unteransprüche.

Weiterer Gegenstand der vorliegenden Erfindung gemäß einem zweiten Aspekt der vorliegenden Erfindung ist ein Aerogel nach Anspruch 14. Weitere, vorteilhafte Ausgestaltungen dieses Erfindungsaspektes sind Gegenstand des diesbezüglichen Unteranspruchs.

Wiederum weiterer Gegenstand der vorliegenden Erfindung gemäß einem dritten Aspekt der vorliegenden Erfindung ist die Verwendung eines Aerogels nach Anspruch 16.

Weiterer Gegenstand der vorliegenden Erfindung gemäß einem vierten Aspekt der vorliegenden Erfindung ist die Verwendung eines Aerogels nach Anspruch 17.

Es versteht sich von selbst, dass Besonderheiten, Merkmale, Ausgestaltungen und Ausführungsformen sowie Vorteile oder dgl., welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Zudem gilt, dass alle im Folgenden genannte Werte- bzw. Parameterangaben oder dgl. grundsätzlich mit genormten bzw. standardisierten oder explizit angegebenen Bestimmungsverfahren oder dem Fachmann auf diesem Gebiet geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100 % resultieren; dies versteht sich jedoch von selbst.

Dies vorausgeschickt, wird im Folgenden die vorliegende Erfindung näher beschrieben.

Gegenstand der vorliegenden Erfindung - gemäß einem **e r s t e n** Aspekt der vorliegenden Erfindung - ist somit ein Verfahren zur Herstellung eines Silica-Aerogels mittels eines Sol-Gel-Verfahrens, wobei zunächst ein Lyogel gebildet und das Lyogel anschließend in ein Aerogel überführt wird, wobei für die Bildung des Lyogels mindestens zwei Precursorsole, vorzugsweise zwei Precursorsole, miteinander gemischt werden, wobei ein erstes Precursorsol einen sauren pH-Wert oder einen basischen pH-Wert aufweist und ein zweites Precursorsole einen von dem ersten Precursorsol unterschiedlichen pH-Wert aufweist.

Denn, wie die Anmelderin überraschenderweise herausgefunden hat, kann auf Grundlage des erfindungsgemäßen Verfahrens besonders zeiteffizient zunächst ein insbesondere homogenes, gleichförmig strukturiertes sowie einheitlich ausgebildetes Lyogel erhalten werden, von welchem ausgehend dann vorzugsweise sphärische Aerogelpartikel zugänglich sind.

Es ist dabei ein besonderer Vorteil der vorliegenden Erfindung, dass die Bildung des Lyogels, insbesondere die Geschwindigkeit, mit welcher das Lyogel gebildet wird, auf Basis der im Rahmen der Herstellung bzw. Bildung des Lyogels verwendeten Precursorsole, welche insbesondere spezifisch abgestimmte pH-Werte aufweisen, genau und zielgerichtet beeinflusst werden kann. Hierbei hat es sich bewährt, wenn das erfindungsgemäße Verfahren, insbesondere die Herstellung des Lyogels, innerhalb spezifischer pH-Wert-Bereiche durchgeführt wird, wobei diese anhand der erfindungsgemäßen Verfahrensführung präzise einstellbar sowie kontrollierbar sind. So kann bspw. durch eine Verschiebung des pH-Wertes vom neutralen in den schwach sauren bzw. basischen Bereich eine relative Verlangsamung der Gelbildung bzw. der Gelierung um einige Sekunden erreicht werden, sodass ein homogenes und gleichmäßiges Durchmischen der Precursorsole unmittelbar vor Einsetzen der Gelbildung möglich wird. Demgegenüber erfolgt bspw. eine insbesondere instantane Gelierung, wenn das erfindungsgemäße Verfahren bei neutralem pH-Wert durchgeführt wird. Die vorliegende Erfindung macht so somit also insbesondere die pH-Wertabhängigkeit der Gelierung bzw. der Gelbildungsgeschwindigkeit zu Nutze, um auf dieser Grundlage gezielt Einfluss auf die Lyogelbildung, insbesondere im Hinblick auf Formgebung und Gelpartikelgrößen, zu nehmen. So wird es mit dem erfindungsgemäßen Verfahren bspw. möglich, kugelförmige Lyogelpartikel zu erzeugen, deren Durchmesser auf bis zu mehrere Millimeter eingestellt werden kann.

Dabei zeichnet sich die vorliegende Erfindung durch eine einfache und unkomplizierte Verfahrensführung aus, im Rahmen derer die Gelbildung insbesondere drucklos bzw. bei Atmosphärendruck oder bei nur leicht erhöhten Drücken, vorzugsweise bei Drücken von nicht mehr als 40 bar, durchgeführt werden kann. Bislang war es nicht möglich, sphärische bzw. kugelförmige Silica-Aerogele bzw. Lyogele drucklos aus vorzugsweise zumindest teilweise wässrig-basierten Precursorsolen herzustellen, zumindest nicht in einem schnell sowie einfach durchzuführenden Verfahren. Lediglich bekannt ist ein Verfahren, bei dem ein Sol drucklos in ein Öl eingetropft wird, so dass sich kugelige Partikel ausbilden, die dann langsam gelieren (vgl. Lee, Kyoung-Jin, Fast Synthesis of Spherical Silica Aerogel Powders by Emulsion Polymerization from Water Glass, ChemistrySelect, Vol 3. Issue 4, Januar 31, 2018). Insbesondere die Verwendung eines Öls als Lösungsmittel bzw. umgebendes Medium ist im Rahmen der vorliegenden Erfindung jedoch nicht notwendig bzw. beabsichtigt.

Zudem kann im Rahmen des erfindungsgemäßen Verfahrens eine schnelle Gelierung der Precursorsole, insbesondere binnen weniger Sekunden, erreicht werden. Auf diese Weise können kurze Prozesszeiten bei einem geringen apparativen Aufwand erreicht werden. Insbesondere kann im Rahmen der vorliegenden Erfindung die Verfahrensdauer für die Herstellung von Silica-Aerogelen von der Gelbildung bis zum Trocknungsabschluss - wenn alle Verfahrensschritte in der gleichen Reaktionsvorrichtung durchgeführt werden - auf Zeiten von 1 bis 2 Stunden, insbesondere weniger als 1,5 Stunden reduziert werden.

Eine maßgebliche Schwierigkeit bzw. Herausforderung in der Herstellung von Aerogelen besteht insbesondere darin, gleichförmige, einheitliche sowie strukturell homogen ausgeprägte Partikel zu erzeugen. Mit dem erfindungsgemäßen Verfahren kann diese Schwierigkeit zuverlässig überwunden werden. Die kontrollierte Dosierung bzw. Mischung der unterschiedlichen Precursorsole erlaubt es insbesondere, die Gelierung zeitlich so abzustimmen, dass ein gleichmäßiges, homogenes Mischen bzw.

Verteilen der Precursorsole ineinander gewährleistet ist. Gleichfalls wird es im Rahmen der vorliegenden Erfindung möglich, die Gelbildung sowie den Eintrag bzw. das Einbringen der Precursorsole bzw. des daraus gebildeten Gels so zu steuern, dass ein stabiles Gel, insbesondere in Form sphärischer Gelpartikel, erhalten werden kann, wobei diese Partikel dann weiter zu, insbesondere sphärischen, Aerogelpartikeln umgesetzt werden können.

Hierbei ist es mit dem erfindungsgemäßen Verfahren insbesondere auch möglich die Größe der Lyogelpartikel bzw. deren Partikelgrößenverteilung gezielt zu beeinflussen bzw. einzustellen. Insbesondere die Gelierzeit bzw. Dauer der Gelbildung und die Art und Weise, wie die Precursorsole miteinander gemischt und unmittelbar darauf in die erfindungsgemäße Reaktionsvorrichtung eingebracht werden, erlauben eine gerichtete Erzeugung von Lyogelpartikeln mit definierter Form und Größe. Diese, insbesondere kugelartige bzw. sphärische, Form und Größe verlieren die erfindungsgemäßen Partikel auch dann nicht, wenn das Lyogel in ein Aerogel überführt wird.

Die mit dem erfindungsgemäßen Verfahren erhältlichen, insbesondere sphärischen oder zylinderförmigen, Aerogelpartikel zeichnen sich gegenüber bekannten Aerogelen des Standes der Technik, welche überwiegend ungleichmäßig geformt bzw. kubisch sind, durch eine bessere Fließfähigkeit, höhere Festigkeit bei uniaxialer Druckbelastung sowie eine optimalere Packungsdichte aus, was insbesondere auf die gleichmäßige sphärische bzw. kugelartige Form zurückgeführt werden kann. Die erfindungsgemäßen, insbesondere sphärisch bzw. kugelartig geformten Aerogele sind mit den aus dem Stand der Technik bekannten Verfahren zur Herstellung von Aerogelen bislang nicht zugänglich. Allein die erfindungsgemäße Verfahrensführung bzw. das erfindungsgemäße Verfahren erlauben es, Aerogelpartikel mit einer insbesondere kugelhaften Form und einem kreisförmigen Querschnitt verlässlich zu erzeugen.

Die mit dem erfindungsgemäßen Verfahren zugänglichen sphärischen Aerogelpartikel eignen sich aufgrund ihrer hervorragenden mechanischen Eigenschaften bzw. Widerstandsfähigkeiten sowie der Möglichkeit der Bildung dichter Kugelpackungen hervorragend als Wärmedämmmaterialien, insbesondere in loser Schüttung, aber auch zur Einarbeitung in Dämmputzsysteme. Aufgrund der insbesondere verbesserten Fließfähigkeit, höheren Festigkeit bei uniaxialer Druckbelastung und höheren Packungsdichte gegenüber konventionellen Aerogelpulvern, welche i.d.R. auf unförmigen oder kubischen Partikeln basieren, lassen sich die erfindungsgemäßen sphärischen Aerogele bevorzugt in Pulverschüttungen oder Pulvermischungen wie Wärmedämmputzen einsetzen.

Unter einem Sol-Gel-Verfahren ist im Rahmen der vorliegenden Erfindung ein Verfahren zu verstehen, bei welchem nichtmetallische anorganische oder organische Materialien bzw. anorganisch-organische Hybridmaterialien aus kolloidalen Dispersionen, den sogenannten Solen, erhalten werden. Bei einem Sol-Gel-Verfahren werden üblicherweise aus einer kolloidalen Dispersion, dem Sol, durch Aggregation Partikel im Nanometerbereich erhalten, welche anschließend durch weitere Kondensation und Aggregation ein Gel bilden, d. h. ein dreidimensionales Netzwerk, dessen Poren mit einem Fluid gefüllt sind, wobei das Fluid entweder eine Flüssigkeit oder ein Gas ist.

Unter einem Gel ist im Rahmen der vorliegenden Erfindung ein formbeständiges, an Flüssigkeiten und/oder an Gasen reiches disperses System aus mindestens zwei Komponenten, die zumindest aus einem festen, kolloid zerteilten Stoff mit langen oder weit verzweigten Teilchen, wie beispielsweise Gelatine, Kieselsäure, Montmorillonit, Bentonit, Polysacchariden, Pectinen u. a. und einem Fluid, insbesondere einem Gas oder einer Flüssigkeit, als Dispersionsmittel bestehen. Dabei ist die feste Substanz kohärent, d. h. sie bildet im Dispersionsmittel ein räumliches Netzwerk, wobei die Teilchen durch Neben- oder Hauptvalenzen an verschiedenen Punkten, den sogenannten Haftpunkten, aneinanderhaften. Sind die Zwischenräume zwischen den Teilchen mit einer Flüssigkeit gefüllt, so liegt ein Lyogel vor. Handelt es sich bei dem Dispersionsmittel um Luft, so wird das Gel Aerogel genannt. Für weitere Einzelheiten zu dem Begriff Gel wird auf den Eintrag zu dem Stichwort "Gele" in ROEMPP Chemie Lexikon, 9. erweiterte und neu bearbeitete Auflage, Band 2, 1999, S. 1511 verwiesen.

Bei einem Lyogel handelt es sich um ein Gel, d. h. ein dreidimensionales Netzwerk, dessen Poren mit einer Flüssigkeit gefüllt sind. Spezialfälle des Lyogels sind das Hydrogel, bei welchem die Flüssigkeit Wasser ist, oder das Alkogel, bei welchem die Flüssigkeit ein Alkohol, üblicherweise Ethanol, ist. Lyogele, welche organische Lösemittel enthalten, werden auch als Organogele bezeichnet.

Unter einem Sol ist im Rahmen der vorliegenden Erfindung eine Lösung oder eine feinteilige Dispersion, d. h. eine kolloide Dispersion, zu verstehen.

Unter einer Lösung ist im Rahmen der vorliegenden Erfindung ein Einphasengemisch zu verstehen, bei welchem ein Stoff - der gelöste Stoff - homogen verteilt in einem zweiten Stoff - dem Lösemittel - vorliegt. Unter einer Dispersion ist im Rahmen der vorliegenden Erfindung ein Zweiphasengemisch zu verstehen, bei welcher eine erste Phase mit dem dispergierten Stoff, die sogenannte diskontinuierliche Phase, in einer zweiten Phase, dem Dispersionsmittel bzw. der kontinuierlichen Phase, fein verteilt, insbesondere homogen verteilt, vorliegt. Der Übergang von Lösungen zur Dispersion ist fließend und nicht streng voneinander abzugrenzen, so können beispielsweise kolloidale Lösungen weder eindeutig den Lösungen noch den Dispersionen zugeordnet werden. Auch bei "Lösungen" von hochpolymeren Makromolekülen ist nicht eindeutig bestimmbar, ob eine Lösung oder Dispersion vorliegen. Im Rahmen der vorliegenden Erfindung ist daher unter einem Sol vorzugsweise eine Lösung oder eine feinteilige, d. h. kolloidale Dispersion zu verstehen.

Was nun die Durchführung des erfindungsgemäßen Verfahrens im Einzelnen betrifft, so ist es Rahmen der vorliegenden Erfindung insbesondere vorgesehen, dass die Precursorsole miteinander gemischt und in eine Reaktionsvorrichtung eingebracht werden. Weiterhin bevorzugt wird es, wenn die Precursorsole gemischt und anschließend, insbesondere unmittelbar nach dem Mischen, in eine Reaktionsvorrichtung eingebracht werden. In diesem Zusammenhang ist es wiederum weiter bevorzugt, wenn die Precursorsole, insbesondere unmittelbar nach dem Mischen, in Form von Tropfen, insbesondere tropfenweise, in eine Reaktionsvorrichtung eingebracht werden.

Hierbei wird es erfindungsgemäß besonders bevorzugt, wenn die, insbesondere gemischten, Precursorsole in die Reaktionsvorrichtung eingedüst oder eingetropft, insbesondere vertropft, werden.

Als besonders vorteilhaft hat es sich weiterhin erwiesen, wenn die Precursorsole in eine mit Druck beaufschlagbare Reaktionsvorrichtung in Form von Tropfen, insbesondere tropfenweise, eingebracht, vorzugsweise eingedüst oder eingetropft, bevorzugt vertropft, werden.

Darüber hinaus hat es sich im Rahmen der vorliegenden Erfindung bewährt, wenn die Precursorsole für die Bildung des Lyogels kontinuierlich miteinander gemischt werden, insbesondere mittels eines Zulaufsystems, vorzugsweise mittels eines Zweistoffzulaufs.

Auf Basis dieser erfindungsgemäßen Verfahrensführung kann insbesondere erreicht werden, dass die zwei Precursorsole so gleichmäßig und homogen miteinander gemischt werden, dass die Gelbildung bzw. Gelierung kontrolliert, insbesondere nach einer kontrollierbaren bzw. einstellbaren Dauer, vorzugsweise von wenigen Sekunden, eintritt.

Dabei ist das erfindungsgemäße Verfahren vorzugsweise so ausgelegt, dass die Gelbildung bzw. Gelierung insbesondere in dem Moment eintritt bzw. einsetzt, in dem die miteinander gemischten Precursorsole, vorzugsweise in Form von Tropfen bzw. tropfenweise, in die Vorrichtung eingebracht bzw. insbesondere eingedüst oder eingetropft, bevorzugt vertropft, werden sollen, d.h. in dem Moment einsetzt, indem die Precursorsole über eine Einlassöffnung, insbesondere eine Düse, in die Vorrichtung gelangen. Damit kann im Moment der Tropfenbildung aufgrund der einsetzenden Gelierung sowohl die Form als auch die Größe der gebildeten Lyogelpartikel zuverlässig gesteuert und eingestellt werden. Dies bildet erfindungsgemäß insbesondere die Grundlage für die Erzeugung eines im Hinblick auf seine Partikelgrößenverteilung einheitlichen Lyogels, welches ausgehend von seiner insbesondere tropfenweisen Einbringung in die Reaktionsvorrichtung bevorzugt kugelförmige bzw. sphärisch ausgebildet ist. Auf dieser Grundlage ist gleichfalls die Erzeugung von insbesondere sphärischen bzw. kugelförmigen Aerogelpartikeln möglich, welche im Rahmen der vorliegenden Erfindung auch vorzugsweise vorgesehen ist.

Gemäß einer bevorzugten Ausführungsform der vorliegenden Erfindung hat es sich dabei bewährt, wenn die Bildung des Lyogels bei Atmosphärendruck bzw. bei lediglich leicht erhöhten Drücken, insbesondere bei einem Druck in einem Bereich von weniger als 40 bar, insbesondere weniger als 30 bar, vorzugsweise weniger als 20 bar, bevorzugt bei weniger als 10 bar, ganz besonders bevorzugt Atmosphärendruck, d.h. ca. 1 bar, durchgeführt wird. Noch weiter bevorzugt wird es im Rahmen der vorliegenden Erfindung, wenn die Bildung des Lyogels bei einem Druck in einem Bereich von 1 bis 40 bar, insbesondere 1 bis 30 bar, vorzugsweise 1 bis 20 bar, bevorzugt 1 bis 10 bar, durchgeführt wird. Die vorgenannten bevorzugten Drücke bzw. Druckbereiche sind dabei im Rahmen der vorliegenden Erfindung als absolute Drücke bzw. Druckbereiche zu verstehen.

Dementsprechend hat es sich im Rahmen der vorliegenden Erfindung bewährt, wenn die Bildung des Lyogels in einer mit Druck beaufschlagbaren Vorrichtung, insbesondere einem Autoklav, erfolgt, beispielsweise durch Einbringung der Precursorsole in den Autoklav.

Weiterhin hat es sich im Hinblick auf die Lyogelbildung als vorteilhaft erwiesen, wenn die Herstellung des Lyogels unter einer kontrollierten Atmosphäre, insbesondere unter einer CO₂-, N₂- oder Ar-Atmosphäre oder einer Atmosphäre aus einer Mischung dieser Gase, gegebenenfalls in Kombination mit weiteren Gasen bzw. Stoffen, durchgeführt wird. Bewährt hat es sich insbesondere, wenn CO₂ und/oder N₂, gegebenenfalls in Kombination mit weiteren Gasen bzw. Stoffen, eingesetzt werden. Üblicherweise werden CO₂, Mischungen aus CO₂ und N₂ oder Mischungen aus N₂ und Ammoniak (NH₃) als Prozessmedium bzw. kontrollierte Atmosphäre eingesetzt. Unter einem Stoff ist dabei im Rahmen der vorliegenden Erfindung insbesondere ein chemischer Stoff, d. h. eine chemische Verbindung oder ein Element mit spezifischen physikalischen oder chemischen Eigenschaften zu verstehen.

Im Hinblick auf die Bereitstellung der Precursorsole ist es im Rahmen der vorliegenden Erfindung nun üblicherweise bevorzugt, wenn die Precursorsole voneinander getrennt bereitgestellt werden.

Weiterhin hat es sich für das erfindungsgemäße Verfahren bewährt, wenn die Precursorlösungen für die Bildung des Lyogels voneinander getrennt dosiert und kontinuierlich einander zugeführt werden.

Das erfindungsgemäße Verfahren zeichnet sich demnach also insbesondere dadurch aus, dass die verwendeten Precursorsole, welche voneinander unterschiedliche pH-Werte aufweisen, getrennt voneinander vorgehalten werden sowie auch getrennt voneinander dosiert werden, bevor diese dann dosiert kontinuierlich, insbesondere über ein Zulaufsystem, vorzugsweise einen Zweistoffzulauf, einander zugeführt werden und währenddessen oder nachfolgend, insbesondere in einer Mischstrecke, miteinander gemischt werden. Auf Grundlage dieses Verfahrensführung kann eine besonders homogene und gleichmäßige Durchmischung der Precursorsole erreicht werden, welche insbesondere dadurch noch weiter positiv beeinflusst werden kann, dass innerhalb der Mischstrecke statische Mischelemente angeordnet sind, welche zu der gründlichen Verwirbelung und Mischung der Precursorlösungen in der Mischstrecke beitragen.

Für die Ausbildung eines homogenen, gleichförmigen Gels hat es sich dabei im Rahmen der vorliegenden Erfindung insbesondere als maßgeblich erwiesen, die Geschwindigkeit der Gelbildung auf Basis des pH-Wertes, welchen die, insbesondere gemischten, Precursorsole aufweisen, zu kontrollieren.

In diesem Zusammenhang hat es sich speziell bewährt, wenn das erste Precursorsol einen sauren pH-Wert aufweist und das zweite Precursorsol einen basischen pH-Wert aufweist.

Die konkreten pH-Werte, auf welche die Precursorsole dafür eingestellt werden, können dabei in weiten Bereichen des sauren bzw. basischen pH-Wertebereichs variieren. Es werden im Rahmen der vorliegenden Erfindung jedoch besonders gute Ergebnisse erzielt, wenn der saure pH-Wert in einem Bereich von pH 0 bis 6, insbesondere pH 1 bis 4, vorzugsweise pH 1,5 bis 2,5, liegt. Gleichfalls hat es sich für das erfindungsgemäße Verfahren besonders bewährt, wenn der basische pH-Wert in einem Bereich von pH 7 bis 13, insbesondere pH 8 bis 12, vorzugsweise pH 9 bis 11, liegt.

Für das erfindungsgemäße Verfahren ist hierbei letztlich insbesondere entscheidend, welchen pH-Wert die miteinander gemischten Precursorsole aufweisen. In diesem Zusammenhang hat es sich insbesondere bewährt, wenn die miteinander gemischten Precursorsole einen pH-Wert in einem Bereich von pH 4,5 bis 9,5, insbesondere pH 5 bis pH 9, vorzugsweise pH 5,3 bis 8,5, aufweisen.

Ganz besonders bevorzugt ist es, wenn die miteinander gemischten Precursorsole einen schwach sauren pH-Wert, insbesondere in einem Bereich von pH 4,5 bis 6,8, vorzugsweise pH 5 bis 6,5, oder einen schwach basischen pH-Wert, insbesondere in einem Bereich von pH 7,5 bis 9,5, vorzugsweise pH 7,8 bis 9, aufweisen.

Im Rahmen des erfindungsgemäßen Verfahrens werden schließlich ganz besonders gute Ergebnisse erhalten, wenn die miteinander gemischten Precursorsole einen schwach sauren pH-Wert, insbesondere in einem Bereich von pH 4,5 bis 6,8, vorzugsweise pH 5 bis 6,5, aufweisen.

In diesem Zusammenhang kann es im Rahmen der vorliegenden Erfindung zusätzlich vorgesehen sein, dass den, insbesondere miteinander gemischten, Precursorsolen ein Puffer zugesetzt wird. Unter einem Puffer wird hierbei ein Stoffgemisch verstanden, dessen pH-Wert sich bei Zugabe einer Säure oder einer Base wesentlich weniger stark ändert, als dies in einem ungepufferten System der Fall wäre. Durch die zusätzliche Zugabe eines Puffers zu den, insbesondere gemischten, Precursorsolen kann damit eine noch genauere Kontrolle des pH-Wertes bzw. eine noch effizientere Stabilisierung des pH-Wertes, welcher insbesondere nach Mischen der Precursorsole vorliegt, erreicht werden.

Für die vorgenannten pH-Wertebereiche kann dabei beobachtet werden, dass sich ein hochtransparentes Lyogel, bzw. insbesondere Hydrogel, bildet, wobei dieses im basischen pH-Wertbereich insbesondere zusätzliche elastische Eigenschaften aufweist. Demgegenüber zeichnen sich Gele, die im Sauren gebildet wurden vorzugsweise durch eine höhere Festigkeit bzw. verminderte Elastizität im Vergleich zu den im basischen Bereich gebildeten Gelen aus. Für die aus diesen Lyogelen erhältlichen Aerogele hat sich gezeigt, dass sowohl im Basischen als auch im Sauren gebildete Lyogelpartikel zu hochporösen Gelen führen, die beispielhafte Porositäten von 95,7 % und mehr aufweisen. Weiterhin kann beobachtet werden, dass insbesondere Aerogele aus im Sauren gebildeten Lyogelpartikeln gegenüber Aerogelen aus im Basischen gebildeten Lyogelen eine größere spezifische Oberfläche nach BET sowie ein höheres Porenvolumen aufweisen, wobei hier im Hinblick auf die BET-Oberfläche nahezu ein Unterschied von Faktor 2 sowie im Hinblick auf das Porenvolumen ein Unterschied von Faktor 1,3 festgestellt werden kann.

Besonders gute Ergebnisse werden für das erfindungsgemäße Verfahren darüber hinaus auch erhalten, wenn die Herstellung des Lyogels bei Temperaturen oberhalb von 50 °C, insbesondere 60 °C, vorzugsweise 70 °C, bevorzugt 80 °C, durchgeführt wird.

Bei den vorgenannten pH-Werten, Drücken und Temperaturen kann eine besonders rasche sowie gleichfalls kontrolliert einsetzende Gelbildung erreicht werden, wodurch beispielsweise nahezu sphärische Lyogele zugänglich werden, die formstabil sind und ihre Form auch im weiteren Verfahren beibehalten können.

Hierbei hat es sich erfindungsgemäß besonders bewährt, wenn die Bildung des Lyogels aus den gemischten Precursorsolen innerhalb von weniger als 60 Sekunden, insbesondere weniger als 30 Sekunden, vorzugsweise weniger als 20 Sekunden, bevorzugt weniger als 10 Sekunden, weiter bevorzugt weniger als 5 Sekunden, erfolgt.

Gleichfalls ist es im Rahmen der vorliegenden Erfindung vorzugsweise vorgesehen, dass die Bildung des Lyogels aus den gemischten Precursorsolen innerhalb von mehr als 0,1 Sekunden, insbesondere mehr als 0,5 Sekunden, vorzugsweise mehr als 1 Sekunde, erfolgt. Ganz besonders vorteilhaft für das erfindungsgemäße Verfahren sind dabei Zeitspannen für die Bildung des Lyogels in einem Bereich von 1 bis 5 Sekunden.

Gemäß einer bevorzugten Ausführungsform der vorliegenden Erfindung ist es außerdem vorzugsweise vorgesehen, dass die Bildung des Lyogels und die Überführung des Lyogels in ein Aerogel kontinuierlich bzw. quasi-kontinuierlich erfolgen. Es kann auf Basis des erfindungsgemäßen Verfahrens nämlich insbesondere erreicht werden, dass die Prozesszeiten, insbesondere die Zeiten der einzelnen Verfahrensschritte, derart verkürzt werden, dass eine kontinuierliche oder zumindest quasi-kontinuierliche Herstellung von Aerogelen, insbesondere Silica-Aerogelen, möglich ist. Die Herstellung kann dabei entweder als Eintopf-Verfahren, d. h. in einer Reaktionsvorrichtung, insbesondere einem Autoklav, erfolgen oder in aufeinanderfolgenden Apparaturen, insbesondere mehreren Autoklaven.

Was nun die Zusammensetzung und Beschaffenheit der Precursorsole anbelangt, so ist es im Rahmen der vorliegenden Erfindung üblicherweise bevorzugt, wenn die Precursorsole in Form einer Lösung oder Dispersion vorliegen.

Hierbei ist im Rahmen der vorliegenden Erfindung unter einem Precursor eine Vorläufersubstanz zu verstehen, aus welcher durch chemische Reaktion, insbesondere beispielsweise durch Hydrolyse oder Solvolyse und anschließende Kondensation, die gewünschte Zielverbindung, insbesondere ein SiO₂-Netzwerk, entsteht.

Dementsprechend können im Rahmen der vorliegenden Erfindung im Prinzip sämtliche Verbindungen als Precursor eingesetzt werden, welche in der Lage sind, ein Gel auszubilden.

Dabei wird es erfindungsgemäß besonders bevorzugt, wenn die Precursorsole Silicium-basierte Precursor enthalten. Im Hinblick auf die Zusammensetzung der erfindungsgemäß verwendeten Precursorsole hat es sich weiterhin als vorteilhaft erwiesen, wenn die Precursorsole Silicium in Mengen in einem Bereich von 3 bis 20 Gew.%, insbesondere 4 bis 15 Gew.%, vorzugsweise 5 bis 10 Gew.%, bezogen auf Precursorsole, enthalten.

In diesem Sinne werden im Rahmen der vorliegenden Erfindung bevorzugt übersättigte Precursorlösungen verwendet, da beobachtet worden ist, dass insbesondere bei Verwendung von übersättigten Lösungen eine ausreichend schnelle Gelbildung erreicht werden kann. Beispielsweise beträgt etwa die Sättigungskonzentration eines geeigneten Precursors wie monomerer Kieselsäure bei pH = 7 ca. 0,002 mol/l. Erfindungsgemäß wird es demgegenüber bevorzugt, wenn die Konzentration an Silizium in dem beispielhaften Kieselsäure-basierten Precursorsol zwischen 0,83 mol/l (5 Gew.%) und 1,66 mol/l (10 Gew.%) liegt. Rechnerisch ergibt sich daraus eine Übersättigung um mehr als das 400-fache.

Im Rahmen der vorliegenden Erfindung werden nun besonders gute Ergebnisse erhalten, wenn die Precursor ausgewählt sind aus der Gruppe von Kieselsäuren, insbesondere kolloidaler Kieselsäure, Kieselsolen, Silikasolen, Silanen, insbesondere Tetraalkoxysilanen, Siloxanen, Silikaten und deren Mischungen.

Die zuvor genannten Verbindungen bilden bei Hydrolyse ein, gegebenenfalls organisch modifiziertes, Siliciumdioxid-Netzwerk aus, welches sich hervorragend zur Herstellung von Silica-Aerogelen eignet.

Besonders gute Ergebnisse werden in diesem Zusammenhang erhalten, wenn der Precursor ausgewählt ist aus Kieselsäuren, insbesondere kolloidaler Kieselsäure, Kieselsolen und Tetraalkoxysilanen, vorzugweise Tetraetoxysilanen und/oder Tetrametoxysilanen. Besonders bevorzugt wird es dabei, wenn der Precursor eine Kieselsäure ist.

Im Rahmen einer bevorzugten Ausführungsform der vorliegenden Erfindung hat es sich dabei insbesondere bewährt, wenn für das sauer eingestellte Precursorsol als Precursor Kieselsäure eingesetzt wird, welche bspw. aus Natronwasserglas mittels Ionenaustausches hergestellt wird sowie insbesondere einen Feststoffgehalt von bis 10 Gew.% aufweist. Der pH-Wert einer solchen Kieselsäurelösung liegt bei pH 3,5 bis 2,0. Für eine verbesserte Lagerstabilität kann der pH-Wert gegebenenfalls auch noch weiter gesenkt werden, z. B. mit Salzsäure auf einen Wert von ca. pH 1.

Für das basisch eingestellte Precursorsol wird es erfindungsgemäß ganz besonders bevorzugt, wenn als Precursor eine basisch eingestellte Kieselsäurelösung, welche bspw. aus Natronwasserglas hergestellt und anschließend mit einer Base, z. B. Natronlauge und/oder Ammoniak, auf pH-Werte von 8,5 bis 9,5 eingestellt werden kann. Der Feststoffgehalt kann hierbei bevorzugt bis zu 10 Gew.% betragen.

Alternativ hat es sich ebenso als besonders vorteilhaft erwiesen, wenn für das basisch eingestellte Precursorsol als Precursor eine Wasserglaslösung auf Basis von Natron- und/oder Kali-Wasserglas, insbesondere mit einem SiO₂-Gehalt von 10 Gew.%, verwendet wird.

Auch kann es im Rahmen der vorliegenden Erfindung ganz besonders bevorzugt vorgesehen sein, dass für das basisch eingestellte Precursorsol als eine wässrige kolloidale Suspension nahezu kugelförmiger Polykieselsäure-Moleküle mit 10 bis 40 Gew.% SiO₂, insbesondere mit einem pH-Wert in einem Bereich von pH 8 bis 10, verwendet wird.

Nicht zuletzt hat es sich für das erfindungsgemäße Verfahren auch als besonders geeignet erwiesen, wenn für das basisch eingestellte Precursorsol als Precursor eine, insbesondere vorhydrolysierte und teilkondensierte, Alkoxysilanlösung, vorzugsweise mit einem Feststoffgehalt zwischen 10 und 20 Gew.%, verwendet wird. Bei einer solchen Lösung handelt es sich insbesondere um eine teilwässrige Lösung, wobei der Wassergehalt in Abhängigkeit des verwendeten Alkoxysilans eingestellt werden kann und im Molverhältnis H₂O:der Anzahl der Alkoxygruppen bevorzugt 1:1 bis 2:1 beträgt. Für diese bevorzugte Ausführungsform der vorliegenden Erfindung hat es sich außerdem als vorteilhaft erwiesen, wenn dem basisch eingestellten Precursorsol Tenside, bspw. etwa Cetyl-Trimethyl-Ammoniumchlorid, zugegeben werden, insbesondere da diese die Löslichkeit der teils organischen Alkoxysilanlösung in dem sauren Precursorsol, bspw. in einer wässrigen, sauren Kieselsäurelösung, erhöhen können.

Im Rahmen der vorliegenden Erfindung ist es weiterhin üblicherweise vorgesehen, dass die Precursorsole jeweils mindestens ein Löse- oder Dispersionsmittel aufweisen.

In diesem Zusammenhang hat es sich bewährt, wenn das Löse- oder Dispersionsmittel ausgewählt ist aus Alkoholen, insbesondere Methanol, Ethanol, Isopropanol, Ethern, Dimethylsulfoxid (DMSO), N,N-Dimethylformamid (DMF), Aceton, Propylencarbonat, Essigsäureethylester, Wasser und deren Mischungen.

Besonders gute Ergebnisse werden in diesem Zusammenhang erhalten, wenn das Löse- oder Dispersionsmittel aus Alkoholen, insbesondere Methanol, Ethanol, Isopropanol, Wasser und deren Mischungen besteht. Insbesondere Mischungen aus organischen Lösemitteln und Wasser, insbesondere Ethanol und Wasser, sind im Rahmen der vorliegenden Erfindung besonders bevorzugt, da einerseits durch das Wasser eine rasche Hydrolyse und Kondensation der Precursorverbindungen erfolgt und andererseits ein Anteil an organischen Lösemitteln die Entfernung des Löse- oder Dispersionsmittels aus den Poren des Lyogels befördert.

Der Einsatz von organischen Lösungsmitteln wie Ethanol, Aceton, Dimethylsulfoxid zur Gelsynthese bietet außerdem die Möglichkeit, Hydrophobierungsmittel wie z. B. Trimethylsilanol, Methyltriethoxysilan, Diphenylsilandiol, Hexamethyldisilazan etc. ebenfalls direkt während des Gelierungsprozesses zu verwenden.

Erfindungsgemäß werden für die Herstellung von Silica-Aerogelen bzw. -Lyogelen insbesondere zunächst Precursorlösungen auf Basis von vorzugsweise Kieselsolen, kolloiden Kieselsäuren und Kieselsäuretetraethylestern hergestellt und vorgelegt. Im Falle der Kieselsole und der Kieselsäure handelt es sich um vorverkieseltes Wasserglas (Polykieselsäuren) mit unterschiedlichem Verkieselungsgrad und reduziertem Alkalianteil. Die im Allgemeinen mittels Ionenaustausch hergestellten Mono-Kieselsäuren liegen aufgrund von Kondensationsprozessen dabei überwiegend als Di- und Tri-Kieselsäuren vor.

Die Kieselsole weisen hingegen üblicherweise einen deutlich höheren Verkieselungsgrad auf und haben im Allgemeinen eine Primärpartikelgröße zwischen 5 und 40 nm. Im Vergleich zu den oftmals bei der Aerogel-Herstellung verwendeten Kieselsäuretetraethylestern (TMOS, TEOS) und Kaliwassergläsern bietet die Verwendung von Kieselsolen und Kieselsäuren die Möglichkeit der gezielten Steuerung des Gelierungs- und anschließenden Reifungsprozesses der Lyogele bzw. insbesondere Hydrogele. In den Kieselsolen und Kieselsäuren liegen die Kieselsäurenanopartikel im Allgemeinen über Ionenladungen stabilisiert in Lösungen vor.

Eine Möglichkeit, Polykieselsäuren mit geringem Wassergehalt und einem höheren Anteil an organischen Lösemitteln zu erhalten, bietet der Einsatz von alkoholischen Kieselsäuretetraethylestern, die jedoch erst vorhydrolysiert werden müssen, um eine ausreichend schnelle Polykondensation der sich bildenden Monokieselsäure zu gewährleisten. Um den Anteil an Monokieselsäuren in der Precursorlösung bzw. -sol zu erhöhen, kann nach einer erfolgten Hydrolyse der Kieselsäuretetraethylester wässrige Kieselsäurelösungen hinzugegeben werden, woraufhin anschließend die Gelbildung initiiert werden kann, um so ein Organogel mit geringem Wassergehalt herzustellen.

Wie bereits ausgeführt wurde, wird es erfindungsgemäß bevorzugt, wenn die Precursorsole übersättigte Sole sind. In diesem Zusammenhang hat es sich weiterhin als vorteilhaft ergeben, wenn die, insbesondere übersättigten, Precursorsole einen gewissen Feststoffgehalt aufweisen, sodass es zur Ausbildung eines formstabilen Gels kommt. Unter dem Feststoffgehalt des Sols ist dabei der Anteil des Sols zu verstehen, welcher nach Entfernung sämtlicher flüssiger Bestandteile zurückbleibt.

Es hat sich im Rahmen der vorliegenden Erfindung dabei bewährt, wenn die Precursorsole, insbesondere einzeln bzw. unabhängig voneinander, einen Feststoffgehalt von mindestens 2 Gew.%, insbesondere 2,5 Gew.%, vorzugsweise 3 Gew.%, bevorzugt 4 Gew.%, besonders 5 Gew.%, bezogen auf je das Sol, aufweisen.

Gemäß einer bevorzugten Ausführungsform der vorliegenden Erfindung ist es in diesem Zusammenhang vorgesehen, dass die Precursorsole, insbesondere einzeln bzw. unabhängig voneinander, einen Feststoffgehalt im Bereich von 2 bis 30 Gew.%, insbesondere 2,5 bis 20 Gew.%, vorzugsweise 3 bis 15 Gew.%, bevorzugt 4 bis 10 Gew.%, besonders bevorzugt 5 bis 9 Gew.%, bezogen auf je das Sol, aufweisen.

Mit Feststoffgehalten im vorgenannten Bereich lassen sich besonders rasch formstabile Lyogele erhalten, welche auch den gewünschten hohen Porenanteil aufweisen.

Im Rahmen der vorliegenden Erfindung kann es vorgesehen sein, dass die Precursorsole bzw. insbesondere zumindest eines der Precursorsole ein Hydrophobierungsmittel, insbesondere ein Silanisierungsmittel, enthält. Der Einsatz eines Hydrophobierungsmittels, insbesondere eines Silanisierungsmittels, in dem Precursorsol bzw. den Precursorsolen führt insbesondere zu einem Einbau von hydrophoben Gruppen in das Gerüst des Lyogels. Dies wiederum bedingt eine elastischere Gelstruktur, welche bspw. bei einem Lösemittelaustausch oder auch bei der Trocknung zum Aerogel deutlich belastbarer ist als beispielsweise eine reine SiO₂-Struktur.

Im Rahmen der vorliegenden Erfindung wird es dabei bevorzugt, wenn das Hydrophobierungsmittel ausgewählt ist aus Organosilanen, insbesondere Monoorganosilanen, Diorganosilanen, Triorganosilanen, Silazanen, Silanolen, insbesondere Monoorganosilanolen, Diorganosilanolen, und deren Mischungen. Unter Organosilanen oder Organosilanolen sind im Rahmen der vorliegenden Erfindung Silane bzw. Silanole mit organischen Gruppen, insbesondere hydrophoben organischen Gruppen, wie beispielsweise Alkyl, Alkenyl oder Aryl, zu verstehen.

Wenn im Rahmen der vorliegenden Erfindung ein Silan als Hydrophobierungsmittel eingesetzt wird, so kann dessen chemische Natur gleichfalls in weiten Bereichen variieren. Besonders gute Ergebnisse werden jedoch erhalten, wenn ein Silan der allgemeinen Formel I

R¹ₙSiR²₄₋ₙ (I)

mit
- n =: 1 bis 3, insbesondere 1 oder 2, vorzugsweise 1;
- R¹ =: C₁- bis C₃₀-Alkyl und/oder C₆- bis C₃₀-Aryl, insbesondere C₂- bis C₂₀-Alkyl und/oder C₆- bis C₂₀-Aryl, vorzugsweise C₃- bis C₂₀-Alkyl und/oder C₆- bis C₂₀-Aryl, bevorzugt C₄- bis C₁₅-Alkyl und/oder C₆- bis C₁₅-Aryl, besonders bevorzugt C₅- bis C₁₂-Alkyl und/oder C₆- bis C₁₂-Aryl, ganz besonders bevorzugt C₅- bis C₁₂-Alkyl;
- R² =: Halogenid, insbesondere Chlorid, Bromid und/oder Iodid, OX mit X = Wasserstoff, Alkyl, Aryl, Polyether und/oder Carbonsäurederivat, insbesondere Alkyl, vorzugsweise C₁- bis C₈-Alkyl, bevorzugt C₂- bis C₄-Alkyl;
verwendet wird.

Besonders gute Ergebnisse werden im Rahmen der vorliegenden Erfindung erhalten, wenn das Hydrophobierungsmittel ausgewählt ist aus Organochlorsilanen, insbesondere Monoorganochlorsilanen, Diorganochlorsilanen, Triorganochlorsilanen, Methoxyorganosilanen, insbesondere Trimethoxyorganosilanen, Dimethoxydiorganosilanen, Methoxytriorganosilanen, Ethoxyorganosilanen, insbesondere Triethoxyorganosilanen, Diethoxydiorganosilanen, Ethoxytriorganosilanen, Hexamethylendisilazan, Trimethylsilanol, Diphenylsilandiol, Phenyltriethoxysilan, Trimethylisopropenoxysilan und deren Mischungen. Durch den frühzeitigen Einsatz von Hydrophobierungsmitteln, insbesondere Silanisierungsmitteln, vor der Gelbildung können die sich ausbildende Netzwerkstruktur beeinflusst und die sich bildenden Porengrößen gesteuert werden. Zudem kann eine Elastifizierung des Gelnetzwerkes durch den Einbau von mono- und difunktionalen Silanisierungsmitteln erreicht werden. Beides kann genutzt werden, um etwa einen anschließenden Lösemittelaustausch des hergestellten Hydrogels zu beschleunigen.

Im Rahmen der vorliegenden Erfindung wird es - wie zuvor bereits ausgeführt - bevorzugt, wenn die, insbesondere gemischten, Precursorsole in Form von Tropfen in eine, insbesondere mit Druck beaufschlagbare, Vorrichtung eingebracht werden, insbesondere eingedüst oder eingetropft, bevorzugt vertropft, werden.

Durch die Einbringung in Tropfenform, beispielsweise durch Eintropfen oder Eindüsen in die, insbesondere mit Druck beaufschlagbare, Vorrichtung, insbesondere bspw. einen Autoklav, ist es möglich, Aerogele mit nahezu kreisförmigem Querschnitt zu synthetisieren. Je nach Einstellung der Tropfgeschwindigkeit, d.h. der Dosierung der Precursorsole, bzw. der Eindüsbedingungen der, insbesondere gemischten, Precursorsole in die Vorrichtung können nahezu sphärische und/oder auch zylinderförmige Partikel erhalten werden. Die Düse kann dabei beispielsweise in Form einer Schlitzdüse oder einer Kapillare ausgestaltet werden und die, insbesondere gemischten, Precursorsole durch Pumpen, insbesondere Hochdruckpumpen, in die Vorrichtung eingebracht werden.

Die Tröpfchengröße kann hierbei insbesondere durch die gewählte Düsenöffnung und/oder die Geliergeschwindigkeit gesteuert werden und liegt beim Einsatz einer 2 mm-Düse typischerweise in einem Bereich zwischen 0,5 bis 5 mm. Durch die Auswahl einer kleineren Düse kann die Gelpartikelgröße weiter reduziert werden. Die sich ausbildenden Partikel weisen vorzugsweise eine Kugelform auf und behalten die Form auch bei den nachfolgenden Verfahrensschritten bei.

Die Einbringung der, insbesondere gemischten, Sole in Form von Tropfen in die, insbesondere mit Druck beaufschlagbare, Vorrichtung ermöglicht es also, nahezu sphärische Lyogelpartikel zu erhalten, welche auch im weiteren Prozess formstabil bleiben. Hierdurch sind kugelförmige Aerogele zugänglich, welche gegenüber dem Stand der Technik verbesserte mechanische Eigenschaften aufweisen und dichtere Kugelpackungen bilden können, und sich folglich besser als Wärmedämmmaterialien eignen, sowohl in loser Schüttung als auch beispielsweise zur Einarbeitung in Dämmputzsysteme.

Gemäß einer besonderen Ausführungsform der vorliegenden Erfindung kann es vorgesehen sein, dass die Precursorsole vor Einbringung in die, insbesondere mit Druck beaufschlagbare, Vorrichtung, vorgeliert werden. Unter einer Vorgelierung bzw. Vorkondensation ist die Bildung größerer Netzwerkstrukturen und Aggregate zu verstehen, wobei jedoch noch kein durchgehendes räumliches Netzwerk erhalten wird. Auch die vorgelierten, insbesondere miteinander gemischten, Sole sind immer noch fließfähig und können dementsprechend in eine Vorrichtung eingedüst oder eingetropft werden. Eine Vorgelierung kann bspw. durch eine Anpassung der Weg- bzw. Mischstrecke bis zum Einbringen der Precursorsole in die Reaktionsvorrichtung erfolgen. Die Dauer der Vorgelierung ist dabei von der Art und Konzentration der Precursor, dem pH-Wert und/oder der Größe und Form der zu bildenden Lyogel- bzw. Aerogelpartikel, etc. abhängig.

Zusätzlich zu der erfindungsgemäß bevorzugt durch pH-Wertregulierung kontrollierten bzw. initiierten Gelierung, kann die Gelierung, insbesondere auch eine Vorgelierung, der Precursorsole weiter durch Elektrolytzusätze, beispielsweise mehrwertige Metallsalze, und denaturierende Lösungsmittel wie Ethanol und Aceton beeinflusst bzw. insbesondere die Hydrolyse- und Kondensationsgeschwindigkeit der Silica-Sole beschleunigt werden. Die Polykondensationsfähigkeit des Precursors, bspw. insbesondere der Kieselsäuren, stellt hierbei den geschwindigkeitsbestimmenden Schritt bei der Bildung eines formstabilen, dreidimensionalen Netzwerks dar. Es hat sich gezeigt, dass durch die Verwendung von Ethanol und/oder Elektrolyten die gezielte Gelierung der Precursorsole bzw. insbesondere Kieselsäuren und/oder Kieselsole möglich ist. Organogele mit 66 Vol.-% Ethanolgehalt können so synthetisiert werden. Diese zeichnen sich durch eine hohe Hydrolyse- und Kondensationsgeschwindigkeit sowie die Bildung eines formstabilen Organogelnetzwerks aus.

Bevorzugte Kieselsäuretetraethylester wie beispielsweise Tetraethylorthosilikat (TEOS) und Tetramethylorthosilikat (TMOS) bieten - wie zuvor ausgeführt - die Möglichkeit zur Herstellung von Organolgelen mit geringem Wassergehalt, was bspw. einen nachfolgenden Lösemittelaustausch deutlich beschleunigen kann. Um die Geliergeschwindigkeiten dieser Precursorsole zu beschleunigen, kann eine Vorhydrolyse der Metallalkoholate erfolgen, die sowohl im sauren als auch basischen pH-Bereich durchgeführt werden kann, wobei die Ausbildung von dreidimensionalen Netzwerken im Sauren begünstigt ist.

Als Katalysatoren für die Vorgelierung bzw. -kondensation können mineralische Säuren wie Salzsäure verwendet werden. Insbesondere kann die Vorkondensation durch den Einsatz von Katalysatoren, wie beispielsweise organischen Säuren, insbesondere Essigsäure, anorganischen Säuren, wie Salzsäure, oder auf Lewissäuren, wie beispielsweise Titantetrabutanolat, beschleunigt werden.

Eine vorgeschaltete Hydrolyse der Kieselsäureester kann im basischen pH-Bereich unter Verwendung von z.B. Ammoniak bei einem pH-Wert von 9 erfolgen, um eine nachgeschaltete Hydrolyse zu beschleunigen.

Eine Vorkondensation mit Essigsäure bei pH-Werten von 3,5 bis 4,5 und stöchiometrischem Gehalt von Wasser zu Tetraethylorthosilikat von 2,5 bis 3,5 erzeugt innerhalb weniger Stunden Precursorsole, die durch pH-Wert Verschiebungen und Wasserzugabe geliert werden können. Zusätzlich ist es möglich, bei diesen vorkondensierten Tetraethylorthosilikatlösungen bzw. -solen den pH-Wert in den basischen Bereich zu verschieben.

Gemäß einer bevorzugten Ausführungsform der vorliegenden Erfindung betrifft die vorliegende Erfindung ein zuvor beschriebenes Verfahren, wobei
(a) in einem ersten Verfahrensschritt mindestens zwei Precursorsole, vorzugsweise zwei Precursorsole, miteinander gemischt werden, wobei ein erstes Precursorsol einen sauren pH-Wert oder einen basischen pH-Wert aufweist und ein zweites Precursorsole einen von dem ersten Precursorsol unterschiedlichen pH-Wert aufweist, und
(b) in einem auf den ersten Verfahrensschritt (a) folgenden zweiten Verfahrensschritt miteinander gemischt und, insbesondere unmittelbar nach dem Mischen, in eine Reaktionsvorrichtung eingebracht werden, vorzugsweise in Form von Tropfen, bevorzugt tropfenweise, wobei ein partikelförmiges Lyogel erhalten wird.

Auf diese spezielle Ausführungsform des erfindungsgemäßen Verfahrens lassen sich sämtliche Vorteile und Besonderheiten sowie Merkmale, welche zuvor genannt wurden, gleichermaßen anwenden.

Im Rahmen der vorliegenden Erfindung kann es darüber hinaus vorgesehen sein, dass das Lyogel nach seiner Bildung altern gelassen wird. Falls das Lyogel altern gelassen wird, so wird es bevorzugt, wenn das Lyogel für einen Zeitraum von 1 Minute bis 1 Stunde, insbesondere 5 bis 50 Minuten, vorzugsweise 10 bis 45 Minuten, bevorzugt 15 bis 40 Minuten, altern gelassen wird. Durch eine Alterung des Lyogels werden insbesondere die Gelstrukturen verfestigt, so dass diese im nachfolgenden Trocknungsprozess deutlich stabiler und widerstandsfähiger sind.

Bevorzugt wird die Alterung des Lyogels bei der Temperatur durchgeführt, bei welcher die Bildung des Lyogels erfolgt. In diesem Zusammenhang wird es bevorzugt, wenn die Alterung des Lyogels bei Temperaturen oberhalb von 50 °C, insbesondere 60 °C, vorzugsweise 70 °C, bevorzugt 80 °C, durchgeführt wird. Besonders gute Ergebnisse werden hierbei erfindungsgemäß erhalten, wenn die Alterung des Lyogels im Temperaturbereich von 50 bis 150 °C, insbesondere 60 bis 140 °C, vorzugsweise 70 bis 130 °C, durchgeführt wird.

Die Drücke, bei welchen der Alterungsprozess durchgeführt wird, können in weiten Bereichen variieren. Besonders bevorzugt wird es jedoch im Rahmen der vorliegenden Erfindung, wenn die Alterung des Lyogels bei dem Druck, wie dieser auch bei der Bildung des Lyogels angewendet wurde, durchgeführt wird.

Im Rahmen der vorliegenden Erfindung ist es somit möglich, die üblicherweise mindestens 2 Stunden dauernde Alterungszeit des Lyogels, insbesondere des Hydrogels, auf ca. 30 Minuten zu reduzieren.

Im Rahmen der vorliegenden Erfindung kann es vorgesehen sein, dass nach der Bildung des Lyogels, insbesondere im Anschluss an Verfahrensschritt (b), ein Lösemittelaustausch vorgenommen wird, insbesondere in einem dritten Verfahrensschritt (c). Ein Lösemittelaustausch kann insbesondere notwendig sein, um eine nachfolgende Trocknung des Lyogels zum Aerogel zu erleichtern.

Insbesondere das den Precursorsolen zugesetzte Wasser ist in einem Trocknungsprozess durch Zufuhr thermischer Energie nur schwer aus dem üblicherweise hydrophilen Netzwerk, insbesondere SiO₂-Netzwerk, des Lyogels zu entfernen. Dies gilt auch, wenn das Lyogel hydrophobiert wurde. Die erzeugten und vorzugsweise mit kreisförmigem Querschnitt ausgestatteten Lyogelpartikel, insbesondere Hydrogelpartikel, verfügen im Allgemeinen also über einen Wassergehalt, der die Trocknung erschwert. Es hat sich jedoch gezeigt, dass bereits eine Wasserreduktion in den eingangs verwendeten Precursorsolen, insbesondere bspw. Kieselsäurelösungen, die Trocknungsgeschwindigkeiten der Lyogelpartikel in Abhängigkeit vom zugesetzten organischen Lösungsmittel deutlich beschleunigen kann. Alternativ bzw. zusätzlich kann dann mittels eines Austausches des Lösemittels, insbesondere des Wassers, gegen ein flüchtigeres Lösemittel ein nachfolgender Trocknungsprozess erleichtert werden.

Es kann also, insbesondere um den Wassergehalt der zuvor hergestellten Lyogele, insbesondere Hydro- oder Organogele, vor dem eigentlichen Trocknungsschritt zu erniedrigen, nötig sein, die Gele einem Lösemittelaustausch zu unterziehen, indem die Partikel beispielsweise mit einem organischen Lösemittel überschichtet werden.

In diesem Zusammenhang wird es bevorzugt, wenn zur Durchführung des Lösemittelaustausches das Lyogel mit einem flüssigen oder gasförmigen organischen Lösemittel in Kontakt gebracht wird.

Das organische Lösemittel kann dabei gasförmig in den Reaktionsraum eingebracht werden und verdrängt dann in den Poren des Lyogels eingelagertes Wasser oder andere dort eingelagerte organische Lösemittel. Gleichermaßen ist es auch möglich, dass das Lyogel mit dem flüssigen Lösemittel in Kontakt gebracht, insbesondere in diesem dispergiert oder mit diesem überschichtet wird, und so beispielsweise durch mehrfaches Überschichten mit Lösemitteln und Entfernen des Gemisches von Wasser und/oder organischen Lösemitteln ein weitgehender Lösemittelaustausch erreicht wird. Vorzugsweise ist das Lösemittel, mit welchem der Lösemittelaustausch vorgenommen wird, in einem Trocknungsgas, insbesondere Kohlendioxid, löslich. Auf diese Weise ist es bspw. möglich, eine überkritische Trocknung mit Kohlendioxid deutlich schneller und schonender durchzuführen.

Im Rahmen der vorliegenden Erfindung wird es außerdem bevorzugt, wenn durch den Lösemittelaustausch insbesondere der Wassergehalt des Lyogels auf einen Wert von weniger als 30 Gew.%, insbesondere weniger als 20 Gew.%, vorzugsweise weniger als 15 Gew.%, bevorzugt weniger als 10 Gew.%, bezogen auf das Lyogel, gesenkt wird. Durch eine Senkung des Anteils an insbesondere Wasser in dem Lyogel wird eine zielführende und schonende Trocknung mit Kohlendioxid im überkritischen Bereich möglich.

Im Rahmen der vorliegenden Erfindung ist es vorzugsweise vorgesehen, dass der Lösemittelaustausch, insbesondere das Inkontaktbringen des Lyogels mit dem Lösemittel, unter Atmosphärendruck bzw. moderat erhöhtem Druck, insbesondere in einem Bereich von 1 bis 40 bar, vorgenommen wird. Hierbei hat es sich überraschend gezeigt, dass bereits Drücke knapp oberhalb der Dampfdrücke der eingesetzten Lösungsmittel bei Temperaturen insbesondere oberhalb von 80 °C ausreichend sind, um den Lösemittelaustausch zu erreichen. Vorzugsweise wird im Rahmen der vorliegenden Erfindung während des Lösemittelaustauschs entweder flüssiges Lösemittel bzw. ein Gemisch aus Wasser und organischem Lösemittel aus der Vorrichtung entfernt oder die mit Wasser verunreinigte Gasphase wird zumindest teilweise aus dem Reaktor entfernt und neues Lösemittel in gasförmigem Zustand in den Reaktor eingebracht, um einen möglichst vollständigen Lösemittelaustausch zu erhalten.

Im Rahmen der vorliegenden Erfindung werden also besonders gute Ergebnisse erhalten, wenn der Lösemittelaustausch, insbesondere das Inkontaktbringen des Lyogels mit dem Lösemittel, bei Atmosphärendruck bzw. moderat erhöhten Drücken, insbesondere bei Drücken in einem Bereich von 0 bis 40 bar, vorzugsweise 0 bis 30 bar, durchgeführt wird. In diesem Zusammenhang hat es sich weiterhin bewährt, wenn der Lösemittelaustausch unter einer kontrollierten Atmosphäre, insbesondere unter einer CO₂-, N₂- oder Ar-Atmosphäre oder einer Atmosphäre aus einer Mischung dieser Gase, durchgeführt wird, wie es insbesondere auch für die Lyogelbildung vorzugsweise vorgesehen ist.

Was nun den Temperaturbereich anbelangt, innerhalb welchem der Lösemittelaustausch durchgeführt wird, so hat es sich also bewährt, wenn der Lösemittelaustausch bei erhöhter Temperatur durchgeführt wird. Besonders gute Ergebnisse werden in diesem Zusammenhang erhalten, wenn der Lösemittelaustausch, insbesondere das Inkontaktbringen des Lyogels mit dem Lösemittel, bei Temperaturen oberhalb von 70 °C, insbesondere oberhalb von 80 °C, vorzugsweise oberhalb von 90 °C, bevorzugt oberhalb von 100 °C, besonders bevorzugt oberhalb von 110 °C, durchgeführt wird. Durch eine hohe Temperatur kann speziell bei den bevorzugt angewendeten Drücken überraschenderweise ein möglichst rascher und vollständiger Lösemittelaustausch erreicht werden.

In diesem Zusammenhang kann es gleichermaßen vorgesehen sein, dass der Lösemittelaustauch, insbesondere das Inkontaktbringen des Lyogels mit dem Lösemittel, bei Temperaturen im Bereich von 70 bis 180 °C, insbesondere 80 bis 160 °C, vorzugsweise 90 bis 150 °C, bevorzugt 100 bis 140 °C, besonders bevorzugt 110 bis 130 °C, durchgeführt wird.

Was nun das organische Lösemittel, welches im Zuge des Lösemittelaustausches eingesetzt wird, anbelangt, so hat es sich bewährt, wenn das Lösemittel ausgewählt ist aus der Gruppe der hydrophilen organischen Lösemittel, der hydrophoben organischen Lösemittel und deren Mischungen. Besonders bevorzugt wird es im Rahmen der vorliegenden Erfindung, wenn das organische Lösemittel in Kohlendioxid löslich ist.

Unter einem organischen Lösemittel ist dabei im Rahmen der vorliegenden Erfindung ein Löse- oder Dispersionsmittel zu verstehen, welches organische Gruppe aufweist.

Was nun das organische Lösemittel anbelangt, so hat es sich bewährt, wenn das organische Lösemittel ausgewählt ist aus der Gruppe der von Gruppe von Alkoholen, Ethern, Dimethylsulfoxid, N,N-Dimethylformamid, C₅- bis C₈-Alkanen und deren Mischungen. Besonders gute Ergebnisse werden im Rahmen der vorliegenden Erfindung erhalten, wenn das organische Lösemittel ausgewählt ist aus Methanol, Ethanol, Isopropanol, Dimethylsulfoxid, n-Pentan, n-Hexan, n-Heptan, *cyclo-Hexan* und deren Mischungen. Mit den vorgenannten Lösemitteln lässt sich nicht nur ein Lösemittelaustausch und eine einfache nachfolgende Trocknung erzielen. Die Lösemittel eignen sich auch hervorragend, um das Lyogel mit Modifizierungsreagenzien in Kontakt zu bringen.

Im Rahmen der vorliegenden Erfindung kann es insbesondere auch vorgesehen sein, dass das organische Lösemittel gemeinsam mit einem Hydrophobierungsmittel, insbesondere einem Silanisierungsmittel, mit dem Lyogel in Kontakt gebracht wird. Im Rahmen der vorliegenden Erfindung ist es somit möglich, auch während des Lösemittelaustausches eine Hydrophobierung, insbesondere Silanisierung, des Lyogels vorzunehmen, um so nachfolgend eine einfache Trocknung und Überführung des Hydrogels in ein Aerogel zu ermöglichen. Um eine besonders wirksame Hydrophobierung, insbesondere Silanisierung, zu erreichen, ist es von Vorteil, wenn zu Beginn des Inkontaktbringens des organischen Lösemittels und des Hydrophobierungsmittels mit dem Lyogel der Wasseranteil des Lyogels mindestens 50 Gew.%, insbesondere mindestens 60 Gew.%, vorzugsweise mindestens 70 Gew.% beträgt. Auf diese Weise ist eine schnelle Hydrolyse und Reaktion der reaktiven Gruppen des Hydrophobierungsmittels, insbesondere des Silanisierungsmittels, gegeben.

Was nun die chemische Natur des Hydrophobierungsmittels anbelangt, so hat es sich bewährt, wenn das Hydrophobierungsmittel ausgewählt ist aus Organosilanen, insbesondere Monoorganosilanen, Diorganosilanen, Triorganosilanen, Silazanen, Silanolen, insbesondere, Monoorganosilanolen, Diorganosilanolen und deren Mischungen.

Wenn im Rahmen der vorliegenden Erfindung ein Silan als Hydrophobierungsmittel eingesetzt wird, so kann dessen chemische Natur in weiten Bereichen variieren. Besonders gute Ergebnisse werden jedoch erhalten, wenn ein Silan der allgemeinen Formel I

R¹ₙSiR²₄₋ₙ (I)

mit
- n =: 1 bis 3, insbesondere 1 oder 2, vorzugsweise 1;
- R¹ =: C₁- bis C₃₀-Alkyl und/oder C₆- bis C₃₀-Aryl, insbesondere C₂- bis C₂₀-Alkyl und/oder C₆- bis C₂₀-Aryl, vorzugsweise C₃- bis C₂₀-Alkyl und/oder C₆- bis C₂₀-Aryl, bevorzugt C₄- bis C₁₅-Alkyl und/oder C₆- bis C₁₅-Aryl, besonders bevorzugt C₅- bis C₁₂-Alkyl und/oder C₆- bis C₁₂-Aryl, ganz besonders bevorzugt C₅- bis C₁₂-Alkyl;
- R² =: Halogenid, insbesondere Chlorid, Bromid und/oder Iodid, OX mit X = Wasserstoff, Alkyl, Aryl, Polyether und/oder Carbonsäurederivat, insbesondere Alkyl, vorzugsweise C₁- bis C₈-Alkyl, bevorzugt C₂- bis C₄-Alkyl;
verwendet wird.

Besonders gute Ergebnisse werden in diesem Zusammenhang erhalten, wenn das Hydrophobierungsmittel ausgewählt ist aus Organochlorsilanen, insbesondere Monoorganochlorsilanen, Diorganochlorsilanen, Triorganochlorsilanen, Methoxyorganosilanen, insbesondere Trimethoxyorganosilanen, Dimethoxydiorganosilanen, Methoxytriorganosilanen, Ethoxyorganosilanen, insbesondere Triethoxyorganosilanen, Diethoxydiorganosilanen, Ethoxytriorganosilanen, Hexamethyldenisilazan, Trimethylsilanol, Diphenylsilandiol, Phenyltriethoxysilan, Trimethylisopropenoxysilan und deren Mischungen.

Die während des Lösemittelaustauschs bevorzugt eingesetzten Hydrophobierungsmittel entsprechen somit den Hydrophobierungsmitteln, welche auch bei der Hydrophobierung bzw. Silanisierung der, insbesondere gemischten, Precursorsole eingesetzt werden. Im Rahmen der vorliegenden Erfindung ist es besonders bevorzugt, wenn sowohl das Precursorsol mit einem Hydrophobierungsmittel, insbesondere einem Silanisierungsmittel, versetzt wird, als auch nach der Lyogelbildung eine weitere Hydrophobierung vorgenommen wird.

Durch die Hydrophobierung nach Bildung des Lyogels, insbesondere im Rahmen eines Lösemittelaustauschs oder als eigenständiger Verfahrensschritt, wird eine Hydrophobierung der Poren des Lyogels erzielt. Während des Lösemittelaustauschs kann eine Hydrophobierung der Poren, insbesondere eine Porensilanisierung, mit dem Einsatz weiterer Hydrophobierungsmittel, insbesondere Silanisierungsmittel erfolgen. Hierbei wurde insbesondere festgestellt, dass durch die Verwendung weiterer Hydrophobierungsmittel, wie z B. Hexamethyldisilazan, ein benötigter Lösemittelaustauschschritt deutlich beschleunigt werden kann. Für eine erfolgreiche Silanisierung sollte der Restwassergehalt der Lyogele ausreichend hoch sein, vorzugsweise oberhalb von 50 Gew.%, bezogen auf das Gewicht des Lyogels.

Die pH-Werte der Lösungen oder Dispersion des Hydrophobierungsmittels, insbesondere der Silanisierungslösungen, können in Abhängigkeit der verwendeten Hydrophobierungsmittel, insbesondere Silanisierungsmittel, variieren. Beim Einsatz von Trimethylsilanol, Diphenylsilandiol, Hexamethyldisilazan und Hexamethyldisiloxan sowie weiterer Silanole oder Silanol-bildender Substanzen haben sich pH-Werte größer 8 als vorteilhaft erwiesen. Als Silanisierungslösung können organische Lösemittel, wie bspw. unpolare Alkane (Hexan), aprotische Lösemittel oder alkoholische Lösemittel, wie z. B. Methanol, Ethanol, Isopropanol, oder dgl. eingesetzt werden, denen die zuvor genannten Hydrophobierungsmittel, insbesondere Silanisierungsmittel, zugesetzt werden. Die Lyogele können in der das Hydrophobierungsmittel enthaltenden Lösung oder Dispersion gebadet bzw. mit dieser übersichtet werden, wobei die Kontaktzeiten vorzugsweise bei bis zu 30 Minuten liegen.

Alternativ können die Hydrophobierungsmittel, insbesondere Silanisierungsmittel auch in einer mit organischem Lösemittel gesättigten oder teilweise gesättigten verdichteten Phase, insbesondere der CO₂-, N₂- und/oder Ar-Atmosphäre, vorzugsweise einer CO₂-Phase, eingesetzt werden, wobei die Phase sowohl eine unterkritische Gasphase als eine überkritische Phase sein kann. Als organische Lösemittel eignen sich sowohl unpolare Lösemittel, wie Hexan, aprotische Lösemittel, wie Dimethylsulfoxid, oder alkoholische Lösemittel, wie Ethanol. Die verwendeten Lösemittel können die Löslichkeit der Hydrophobierungsmittel, insbesondere der Silanisierungsmittel in der verdichteten CO₂-Phase verbessern. Bei ausreichender Löslichkeit der Hydrophobierungsmittel, insbesondere der Silanisierungsmittel, im Prozessmedium, d.h. den vorgenannten die Reaktionsatmosphäre-bildenden Gasen, insbesondere im verdichteten CO₂, kann auf den Einsatz organischer Lösemittel verzichtet werden.

Im Rahmen der vorliegenden Erfindung kann es vorgesehen sein, dass der Lösemittelaustausch in mehreren Verfahrensstufen durchgeführt wird, insbesondere in 2 bis 15, vorzugsweise 3 bis 10, bevorzugt 3 bis 4, Verfahrensstufen. In diesem Zusammenhang kann es vorgesehen sein, dass das Lyogel mehrfach mit dem organischen Lösemittel in Kontakt gebracht wird. Vorzugsweise ist dabei vorgegeben, dass in jeder Verfahrensstufe zumindest ein Teil eines Gemisches aus Lösemittel und Wasser oder zu ersetzendem Lösemittel aus dem Reaktor entfernt wird und neues organisches Lösemittel eingebracht wird.

Besonders bevorzugt ist es im Rahmen der vorliegenden Erfindung, wenn durch den Lösemittelaustausch der Wassergehalt des Lyogels auf unter 20 Vol.-%, vorzugsweise unter 15 Vol.-%, bevorzugt unter 10 Vol.-%, bezogen auf das Gesamtvolumen an Löse- oder Dispersionsmitteln, gesenkt wird.

Gemäß einer bevorzugten Ausführungsform kann der Lösemittelaustausch durch den Einsatz von mit Wasser mischbaren Lösemitteln, wie beispielsweise Ethanol, Methanol, Isopropanol und Dimethylsulfoxid, erfolgen. Hierbei zeigt sich, dass der Restwassergehalt in den sphärischen Lyogelpartikeln vorzugsweise auf kleiner 10 Vol.-% gesenkt werden sollte, bevor eine nachgeschaltete Trocknung gestartet wird. Alternativ und gleichermaßen bevorzugt können auch hydrophobe organische Lösemittel für diesen Prozessschritt eingesetzt werden, wie z. B. Hexan, Pentan oder Cyclohexan, welche bei einer ausreichenden Vorsilanisierung das in den Poren eingelagerte Wasser aus dem Lyogel verdrängen können. Der Lösemittelaustausch erfolgt vorzugsweise im verdichteten Kohlendioxid. Hierbei wird das Lösemittel in die Reaktionsvorrichtung eindosiert. Überraschenderweise zeigt sich, dass ein Lösemittelaustausch auch dann erfolgreich durchgeführt werden kann, wenn das Lösemittel nicht in flüssiger Form mit den Gelpartikeln in Kontakt tritt. Es reicht vielmehr aus, wenn sich das Lösemittel im verdichteten CO₂ löst und so in das Gel eindringt und das Wasser aus den Poren verdrängt.

Gemäß einer bevorzugten Ausführungsform der vorliegenden Erfindung betrifft die vorliegende Erfindung ein Verfahren zur Herstellung von Aerogel wie zuvor beschrieben, wobei
(a) in einem ersten Verfahrensschritt mindestens zwei Precursorsole, vorzugsweise zwei Precursorsole, miteinander gemischt werden, wobei ein erstes Precursorsol einen sauren pH-Wert oder einen basischen pH-Wert aufweist und ein zweites Precursorsole einen von dem ersten Precursorsol unterschiedlichen pH-Wert aufweist, und
(b) in einem auf den ersten Verfahrensschritt (a) folgenden zweiten Verfahrensschritt miteinander gemischt und, insbesondere unmittelbar nach dem Mischen, in eine Reaktionsvorrichtung eingebracht werden, vorzugsweise in Form von Tropfen, bevorzugt tropfenweise, wobei ein partikelförmiges Lyogel erhalten wird, und
(c) in einem auf den zweiten Verfahrensschritt (b) folgenden dritten Verfahrensschritt ein Lösemittelaustausch und/oder eine Hydrophobierung des Lyogels durchgeführt wird.

Der Lösemittelaustausch in Verfahrensschritt (c) kann dabei über einen Zeitraum von bis zu 50 Minuten, insbesondere bis zu 40 Minuten, insbesondere bis zu 30 Minuten erfolgen. Besonders bevorzugt ist es im Rahmen der vorliegenden Erfindung, wenn der Lösemittelaustausch über einen Zeitraum von 10 bis 50 Minuten, insbesondere 20 bis 40 Minuten, vorzugsweise 20 bis 30 Minuten, durchgeführt wird.

Für die zuvor beschriebene Ausführungsform des erfindungsgemäßen Verfahrens gelten alle zuvor genannten weiteren Ausführungsformen, Merkmale und Besonderheiten.

Im Rahmen der vorliegenden Erfindung ist es üblicherweise vorgesehen, dass das Lyogel durch Entfernung des Löse- oder Dispersionsmittels in ein Aerogel überführt wird, insbesondere in einem nachfolgenden Verfahrensschritt (d).

In diesem Zusammenhang kann es vorgesehen sein, dass im Anschluss an einen Lösemittelaustausch und/oder eine Hydrophobierung des Lyogels, insbesondere im Anschluss an Verfahrensschritt (c), das Lyogel in ein Aerogel überführt wird. Im Rahmen der vorliegenden Erfindung wird es bevorzugt, wenn die Entfernung des Lösemittels unter erhöhtem Druck durchgeführt wird.

Im Allgemeinen ist es vorgesehen, dass zur Überführung des Lyogels in ein Aerogel das Lyogel mit einem Trocknungsmedium, insbesondere einem Trocknungsgas oder einem überkritischen Medium, in Kontakt gebracht wird. Bevorzugt handelt es sich bei dem Trocknungsmedium um Kohlendioxid. In diesem Zusammenhang kann es vorgesehen sein, dass das Lyogel kontinuierlich oder diskontinuierlich mit dem Trocknungsmedium, insbesondere dem Trocknungsgas oder dem überkritischen Medium, in Kontakt gebracht wird. Bei einem diskontinuierlichen Inkontaktbringen wird das Lyogel in einer Vorrichtung mit einer vorgegebenen Menge des Trocknungsmedium über einen vorgewählten Zeitraum in Kontakt gebracht. Anschließend wird das mit Lösemittel verunreinigte Trocknungsmedium entfernt und gegebenenfalls gegen frisches Trocknungsmedium ausgetauscht bis der gewünschte Trocknungsgrad erreicht ist. Bei dem kontinuierlichen Inkontaktbringen des Lyogels mit dem Trocknungsmedium, auch kontinuierliche Trocknung genannt, wird das Lyogel in einer Vorrichtung von dem Trocknungsmediums überstrichen oder durchströmt bis der gewünschte Trocknungsgrad erreicht ist.

Besonders gute Ergebnisse werden in diesem Zusammenhang erhalten, wenn die Entfernung des Lösemittels bei Drücken von mehr als 50 bar, insbesondere mehr als 60 bar, vorzugsweise mehr als 80 bar, bevorzugt mehr als 100 bar, durchgeführt wird. Gleichermaßen kann es vorgesehen sein, dass die Entfernung des Lösemittels im Bereich von 50 bis 180 bar, insbesondere 80 bis 175 bar, vorzugsweise 100 bis 170 bar, bevorzugt 110 bis 165 bar, besonders bevorzugt 120 bis 160 bar, durchgeführt wird.

Was nun die Temperaturen anbelangt, bei welchem die Entfernung des Lösemittels durchgeführt wird, so hat es sich bewährt, wenn diese bei erhöhten Temperaturen durchgeführt wird.

Üblicherweise wird die Entfernung des Lösemittels bei Temperaturen oberhalb von 50 °C, insbesondere oberhalb von 55 °C, vorzugsweise oberhalb von 60 °C, durchgeführt.

In diesem Zusammenhang kann es gleichermaßen vorgesehen sein, dass die Entfernung des Lösemittels bei Temperaturen im Bereich von 50 bis 160 °C, insbesondere 70 bis 160 °C, vorzugsweise 90 bis 150 °C, bevorzugt 100 bis 140 °C, besonders bevorzugt 110 bis 130 °C, durchgeführt wird.

Durch eine Entfernung des Lösemittels bei den vorgenannten Drücken und Temperaturen kann insbesondere durch eine überkritische Trocknung mittels CO₂ besonders rasch ein Aerogel erhalten werden. Üblicherweise ist es im Rahmen der vorliegenden Erfindung vorgesehen, dass das Lösemittel innerhalb von 10 bis 50 Minuten, vorzugsweise 20 bis 30 Minuten, aus dem Lyogel entfernt wird.

Gegenstand der vorliegenden Erfindung ist vorzugsweise ein Verfahren zur Herstellung eines Aerogels wie zuvor beschrieben, wobei
(a) in einem ersten Verfahrensschritt mindestens zwei Precursorsole, vorzugsweise zwei Precursorsole, miteinander gemischt werden, wobei ein erstes Precursorsol einen sauren pH-Wert oder einen basischen pH-Wert aufweist und ein zweites Precursorsole einen von dem ersten Precursorsol unterschiedlichen pH-Wert aufweist, und
(b) in einem auf den ersten Verfahrensschritt (a) folgenden zweiten Verfahrensschritt miteinander gemischt und, insbesondere unmittelbar nach dem Mischen, in eine Reaktionsvorrichtung eingebracht werden, vorzugsweise in Form von Tropfen, bevorzugt tropfenweise, wobei ein partikelförmiges Lyogel erhalten wird,
(c) in einem auf den zweiten Verfahrensschritt (b) folgenden dritten Verfahrensschritt ein Lösemittelaustausch und/oder eine Hydrophobierung des Lyogels durchgeführt wird, und
(d) in einem auf den dritten Verfahrensschritt (c) folgenden vierten Verfahrensschritt das Lyogel mittels Entfernen des Löse- oder Dispersionsmittels in ein Aerogel überführt wird

Auf diese besondere und bevorzugte Ausführungsform der vorliegenden Erfindung lassen sich sämtliche zuvor genannten Verfahrensmerkmale und Ausführungsformen, insbesondere auch Vorteile und Besonderheiten, ohne Einschränkung lesen.

Was nun die Gesamtdauer des zuvor beschriebenen Verfahrens anbelangt, so wird das erfindungsgemäße Verfahren üblicherweise mit einer Gesamtdauer über die Verfahrensschritte (a) bis (d) unter Verwirklichung des Verfahrensschrittes (c) in einem Zeitraum von 1 bis 2 Stunden, vorzugsweise 1 bis 1,5 Stunden, durchgeführt.

Das erfindungsgemäße Verfahren kann dabei entweder als Eintopfsynthese bzw. - verfahren durchgeführt werden, d. h. in einem Autoklav. Gleichermaßen ist es jedoch auch möglich, dass die einzelnen Schritte in mehreren hintereinandergeschalteten Vorrichtungen, insbesondere Autoklaven, durchgeführt werden. Das erfindungsgemäße Verfahren kann insbesondere ab Einbringung der gemischten Precursorsole in eine Reaktionsvorrichtung unter einer speziellen Atmosphäre, insbesondere unter einer CO₂-Atmosphäre, und optional unter erhöhtem Druck durchgeführt werden. Bevorzugt wird es jedoch, wenn zumindest die Lyogelbildung bei nur geringem Druck, vorzugsweise bei Atmosphärendruck, durchgeführt wird.

Die Trocknung der Partikel erfolgt vorzugsweise in überkritischem CO₂. Die Trocknungszeit der erhaltenen sphärischen Gelpartikeln mit einer Größe von 0,5 bis 5 mm kann mit dem erfindungsgemäßen Verfahren unter Hydrophobierung der Lyogele auf 10 bis 60 Minuten gesenkt werden.

Insbesondere durch eine Einspeisung von komprimiertem Kohlendioxid als Trocknungsmedium kann der Gasstrom zur gezielten kontinuierlichen Trocknung der Organogele genutzt, und eine einstufige Aerogelpartikelerzeugung, d. h. in einem Reaktorgefäß bzw. Reaktor, sichergestellte werden.

Durch die kugelige Partikelform und die typischen Partikeldurchmesser zwischen 0,5 und 5 mm kann die überkritische Trocknung in einem Zeitfenster von bis zu 30 Minuten durchgeführt werden bei einem Druck von 120 bar und einer Temperatur von 60 bis 120 °C.

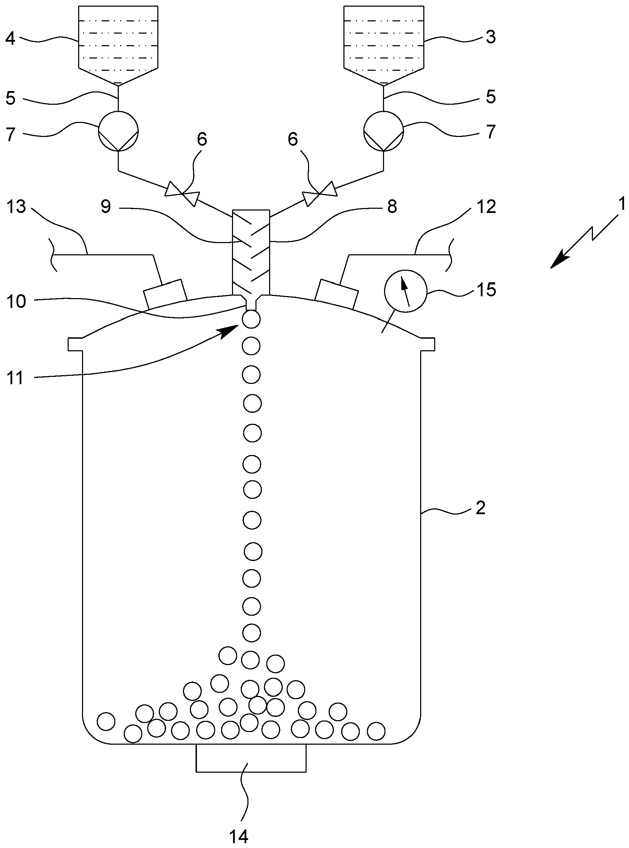

Es zeigt die einzige Figurendarstellung einen Querschnitt einer erfindungsgemäßen Vorrichtung zur Durchführung des erfindungsgemäßen Verfahrens.

Weiterer Gegenstand der vorliegenden Erfindung gemäß einem **z w e i t e n** Aspekt der vorliegenden Erfindung ist ein Aerogel, das nach den zuvor beschriebenen Verfahren erhältlich ist, wobei das Aerogel in Form von Partikeln mit kreisförmigem Querschnitt vorliegt und wobei das Silica-Aerogel Partikelgrößen im Bereich von 0,1 bis 10 mm aufweist.

Wie zuvor bereits dargelegt, zeichnen sich die erfindungsgemäßen Aerogele durch einen insbesondere kreisförmigen Querschnitt aus, wodurch zum einen die mechanische Belastbarkeit und zum anderen die Fähigkeit zur Bildung dichter Kugelpackungen deutlich erhöht wird.

Im Rahmen der vorliegenden Erfindung ist es üblicherweise vorgesehen, dass die Aerogelpartikel sphärisch oder zylinderförmig sind.

Die erfindungsgemäßen Aerogele bieten aufgrund ihrer Form Vorteile bei der Verarbeitung. So lassen sich die sphärischen Aerogele deutlich besser in Pulvermischungen einmischen. Aufgrund ihrer verbesserten Fließfähigkeit, höheren Festigkeiten bei uniaxialer Druckbelastung und höherer Packungsdichte gegenüber konventionellen Aerogelpulvern, welche auf unförmigen oder kubischen Partikeln basieren, lassen sich die erfindungsgemäßen, vorzugsweise sphärischen, Aerogele bevorzugt in Pulverschüttungen oder Pulvermischungen, wie Wärmedämmputzen einsetzen.

Was nun die Partikelgröße der Aerogelpartikel anbelangt, so können diese naturgemäß in weiten Bereichen variieren. Es ist vorgesehen, dass das Aerogel Partikelgrößen im Bereich von 0,1 bis 10 mm, insbesondere 0,2 bis 8 mm, vorzugsweise 0,3 bis 7 mm, bevorzugt 0,5 bis 5 mm, aufweist. Zur Bestimmung der Partikelgrößen ist insbesondere eine Analyse der Partikel mittels Sieben sowie für kleinere Partikel im Bereich unter 1 mm mittels Lichtmikroskopie geeignet.

Gleichermaßen kann es im Rahmen der vorliegenden Erfindung vorgesehen sein, dass die Aerogelpartikel eine monodisperse Teilchengrößenverteilung aufweisen.

Es ist im Rahmen der vorliegenden Erfindung jedoch auch möglich, dass die Aerogelpartikel eine polydisperse Teilchengrößenverteilung aufweisen. Die Teilchengrößenverteilung kann insbesondere gezielt über eine Variation der Eindüs- oder Eintropfbedingungen in den Reaktor gesteuert werden.

Bei den erfindungsgemäßen Aerogelpartikeln handelt es sich um hochporöse Feststoffe. Üblicherweise weist das Aerogel eine Porosität von über 90 %, insbesondere von über 91 %, vorzugsweise von über 93 %, auf.

Gleichermaßen kann es vorgesehen sein, dass das Aerogel eine Porosität von 90 bis 96 %, insbesondere 91 bis 95 %, vorzugsweise 93 bis 94 %, aufweist. Die Porosität des erfindungsgemäßen Aerogels wird hierbei bevorzugt mittels Quecksilber-Porosimetrie bestimmt.

Darüber hinaus weisen die erfindungsgemäßen Aerogele hohe innere Oberflächen auf. So kann es vorgesehen sein, dass das Aoregel eine BET-Oberfläche von mindestens 500 m²/g, insbesondere 600 m²/g, vorzugsweise 650 m²/g, bevorzugt 700 m²/g, besonders bevorzugt 800 m²/g, aufweist.

Gleichermaßen kann es vorgesehen sein, dass das Aerogel eine BET-Oberfläche im Bereich von 500 bis 1.000 m²/g, insbesondere 600 bis 1.050 m²/g, vorzugsweise 650 bis 1.000 m²/g, bevorzugt 700 bis 950 m²/g, besonders bevorzugt 800 bis 900 m²/g, aufweist. Zur Bestimmung bzw. Berechnung der BET-Oberflache wurde die Stickstoffadsorption der Aerogelpartikel untersucht und die diesbezüglichen Ergebnisse für die BET-Berechnungen verwendet.

Was nun die Wärmeleitfähigkeit des Aerogels anbelangt, so kann diese in weiten Bereichen variieren. Üblicherweise weist das Aerogel jedoch im Rahmen der vorliegenden Erfindung sehr niedrige Wärmeleitfähigkeiten auf. Besonders gute Ergebnisse werden erhalten, wenn das Aerogel eine Wärmeleitfähigkeit von höchstens 0,025 W/mK, insbesondere höchstens 0,022 W/mK, vorzugsweise 0,020 W/mK, bevorzugt 0,019 W/mK, aufweist.

Üblicherweise weist das Aerogel eine Wärmeleitfähigkeit im Bereich von 0,012 bis 0,025 W/mK, insbesondere 0,013 bis 0,022 W/mK, vorzugsweise 0,014 bis 0,020 W/mK, bevorzugt 0,015 bis 0,019 W/mK, auf.

Darüber hinaus kann es im Rahmen der vorliegenden Erfindung vorgesehen sein, dass das Aerogel eine Dichte im Bereich von 0,01 bis 0,60 g/cm³, insbesondere 0,11 bis 0,55 g/cm³, vorzugsweise 0,12 bis 0,50 g/cm³, bevorzugt 0,13 bis 0,50 g/cm³, aufweist. Zur Bestimmung der Wärmeleitfähigkeit wird bevorzugt ein Gerät von _{"}C3 Prozess und Analysetechnik"-GmbH vom Typ Hot Disk mit einer Empfindlichkeit bis zu 0,005W / m*K eingesetzt.

Für weitergehende Einzelheiten zu dem erfindungsgemäßen Aerogel kann auf die obigen Ausführungen zu dem erfindungsgemäßen Verfahren verwiesen werden, welche in Bezug auf das erfindungsgemäße Aerogel entsprechend gelten.

Wiederum weiterer Gegenstand der vorliegenden Erfindung gemäß einem **d r i t** - **t e n** Aspekt der vorliegenden Erfindung ist die Verwendung des zuvor beschriebenen Aerogels zu Isolationszwecken, insbesondere zur Schallisolierung, elektrischen Isolierung oder Wärmeisolierung, insbesondere zur Wärmedämmung.

Für weitergehende Einzelheiten zu der erfindungsgemäßen Verwendung kann auf die Ausführungen zu den weiteren Erfindungsaspekten verwiesen werden, welche im Bezug auf die erfindungsgemäße Verwendung entsprechend gelten.

Wiederum weiterer Gegenstand der vorliegenden Erfindung gemäß einem **vier- t e n** Aspekt der vorliegenden Erfindung ist die Verwendung eines Aerogels, wie zuvor beschrieben, zu Dämmzwecken, insbesondere als oder in Wärmedämmungen.

In diesem Zusammenhang kann es vorgesehen sein, dass das Aerogel in loser Schüttung, in einer Pulvermischung oder einer Dämmmasse, beispielsweise einem Dämmputz, eingesetzt wird.

Für weitergehende Einzelheiten zu der erfindungsgemäßen Verwendung kann auf die obigen Ausführungen zu den weiteren Erfindungsaspekten verwiesen werden, welche in Bezug auf die erfindungsgemäße Verwendung entsprechend gelten.

Nachfolgend beschrieben, jedoch nicht von der Erfindung umfasst, ist eine geeignete Vorrichtung zur Herstellung von Aerogelen, wobei die Vorrichtung
(a) mindestens einen Reaktor,
(b) mindestens eine an dem Reaktor angeordnete Einlassöffnung, insbesondere eine Düse, zur Einbringung von Fluiden, insbesondere Flüssigkeiten, in den Reaktor,
(c) mindestens zwei, insbesondere über eine Mischeinrichtung, mit der Einlassöffnung verbundene Zuläufe, und
(d) mindestens eine an dem Reaktor angeordnete Auslassöffnung, insbesondere eine Schleuse, zur Entfernung von Flüssigkeiten oder Feststoffen aus dem Reaktor
aufweist.

Es kann insbesondere vorgesehen sein, dass über die mindestens zwei, insbesondere über eine Mischeinrichtung, bspw. in Form einer Mischstrecke, mit der Einlassöffnung verbundenen Stoffzuläufe mindestens zwei Precursorsole, vorzugsweise zwei Precursorsole, zur Herstellung eines Lyogels zunächst, insbesondere jeweils voneinander getrennt, dosiert sowie daraufhin in der Mischeinrichtung miteinander gemischt werden und unmittelbar darauf die, insbesondere gemischten, Precursorsole in den Reaktor eingebracht, insbesondere eingedüst oder eingetropft, werden.

Vorzugsweise weist der Reaktor nicht nur eine, sondern mehrere Einlassöffnungen zur Einbringung von Fluiden, insbesondere Flüssigkeiten, auf, nämlich mindestens eine Düse zur Einbringung der, insbesondere gemischten, Precursorsole in den Reaktor sowie mindestens eine Düse zur Einbringung weiterer Lösemittel, insbesondere in flüssiger und/oder gasförmiger Form.

Die Auslassöffnung des Reaktors ist vorzugsweise in Form einer Schleuse ausgebildet, um das Lyogel oder Aerogel schnell aus dem Reaktor entfernen zu können oder auch um einen mehrfachen Lösemittelaustausch durch Überschichten und anschließendes Ablassen des verunreinigten Lösemittels aus dem Reaktor zu gewährleisten.

Bevorzugt ist es außerdem auch vorgesehen, dass der Reaktor mit Druck beaufschlagbar ist, insbesondere mit Drücken in einem Bereich von 1 bis 40 bar, vorzugsweise 1 bis 30 bar, bevorzugt 1 bis 20 bar.

Gemäß einer bevorzugten Ausführung ist es vorgesehen, dass die Vorrichtung mindestens eine an dem Reaktor angeordnete Ein- und/oder Auslassöffnung zur Einbringung und/oder Entfernung von Gasen in und/oder aus dem Reaktor aufweist.

Vorzugsweise wird der Druck in dem Reaktor über die Stoffmengen, insbesondere in der Gasphase und/oder einer überkritischen Phase und/oder die Temperatur reguliert. Eine Druckregulierung kann beispielsweise derart erfolgen, dass Gas in den Reaktor eingebracht oder aus diesem entfernt wird.

Darüber hinaus ist es üblicherweise vorgesehen, dass die Vorrichtung eine Einrichtung zur Temperaturregulierung aufweist. Auch über eine Temperaturregulierung können die Prozesse in dem Reaktor und somit in der Vorrichtung insgesamt gezielt beeinflusst und gesteuert werden. Dabei ist es insbesondere möglich, dass der Reaktor beheizt oder gekühlt wird.

Weiterhin ist es vorzugsweise vorgesehen, dass die Vorrichtung mindestens eine Einrichtung, insbesondere mindestens zwei Einrichtungen, zur pH-Wertmessung aufweist. Die Einrichtung zur pH-Wertmessung kann dabei an den Stoffzuläufen, der Mischeinrichtung und/oder dem Reaktor angeordnet sein. Hierbei hat es sich insbesondere bewährt, wenn die Einrichtung zur pH-Wertmessung an den Stoffzuläufen und/oder der Mischeinrichtung angeordnet ist. Weiterhin hat es sich insbesondere als vorteilhaft erwiesen, wenn die Einrichtung zur pH-Wertmessung so angeordnet ist, dass die pH-Werte der Precursorsole je einzeln und/oder nach Mischen der Precursorsole, insbesondere kontinuierlich, gemessen werden, vorzugsweise wobei die Dosierung der Precursorsole in Abhängigkeit von den gemessen pH-Werten und/oder in Abgleich mit einem vorgegebenen Ziel-pH-Wert, bevorzugt für die miteinander gemischten Precursorsole, erfolgt.

In diesem Zusammenhang ist es weiterhin vorzugsweise vorgesehen, dass die Vorrichtung mindestens eine, insbesondere zwei, Einrichtungen zur Dosierung der Precursorsole aufweist. Bevorzugt handelt es sich bei den Einrichtungen zur Dosierung der Precursorsole um Pumpen. Hierbei hat es sich insbesondere bewährt, wenn die Einrichtungen zur Dosierung der Precursorsole in Abhängigkeit vom pH-Wert der, insbesondere miteinander gemischten, Precursorsole regulierbar ist.

Üblicherweise besitzt die Vorrichtung hierfür eine Steuerungs- bzw. Regelungseinrichtung, insbesondere zur Steuerung bzw. Regelung des Drucks, des pH-Wertes und/oder der Temperatur im Reaktor und/oder den Stoffzuläufen bzw. der Mischstrecke.

Die Vorrichtung kann entweder einen Reaktor aufweisen oder jedoch auch mehrere, insbesondere nacheinander folgende und/oder miteinander verbundene Reaktoren aufweisen, so dass die einzelnen Verfahrensschritte des erfindungsgemäßen Verfahrens jeweils in getrennten Reaktoren durchgeführt werden. Auf diese Weise kann eine kontinuierliche Aerogelproduktion erfolgen.

Der Gegenstand der vorliegenden Erfindung wird nachfolgend in nicht beschränkender Weise und exemplarisch anhand der einzigen Figurendarstellungen sowie der Ausführungsbeispiele in beispielhafter und nicht beschränkender Weise verdeutlicht.

Es zeigt die Figur einen Querschnitt einer Vorrichtung 1 zur Durchführung des erfindungsgemäßen Verfahrens. Die Vorrichtung 1 weist einen Reaktor 2 auf, in welchem die Lyogel- bzw. Aerogelbildung stattfindet.

Zur Durchführung des erfindungsgemäßen Verfahrens werden vorzugsweise zwei Precursorsole 3 und 4 miteinander gemischt, wobei das erste Precursorsol einen sauren pH-Wert oder einen basischen pH-Wert aufweist und das zweite Precursorsol einen von dem ersten Precursorsol unterschiedlichen pH-Wert aufweist. Insbesondere wird es in diesem Zusammenhang bevorzugt, wenn eins der zwei Precursorsole 3 und 4, insbesondere das erste Precursorsol 3, einen sauren pH-Wert aufweist und das andere Precursorsol, insbesondere das zweite Precursorsol, einen basischen pH-Wert aufweist. Dementsprechend ist es weiterhin insbesondere vorgesehen, dass die Precursorsole 3 und 4 voneinander getrennt bereitgestellt werden. Bei den erfindungsgemäß bevorzugt verwendeten Precursoren handelt es sich insbesondere um eine, insbesondere zumindest teilweise, wässrige Lösung einer Kieselsäure, eines Kieselsols oder eines Silanhydrolysats.

Im Rahmen einer bevorzugten Ausführungsform der vorliegenden Erfindung weist das sauer eingestellte Precursorsol 3 dabei einen pH-Wert in einem Bereich von pH 0 bis 6, insbesondere pH 1 bis 4, vorzugsweise pH 1,5 bis 2,5, auf, während das basisch eingestellte Precursorsol 4 einen pH-Wert in einem Bereich von pH 7 bis 13, insbesondere pH 8 bis 12, vorzugsweise pH 9 bis 11, aufweist.

Die Precursorsole 3 und 4 werden über ein Zulaufsystem, insbesondere zwei Zuläufe 5, kontinuierlich miteinander gemischt. Hierbei können die Zuläufe 5 über Ventile 6 reguliert bzw. geöffnet werden. Weiterhin kann mittels einer Einrichtung zur Dosierung 7, insbesondere mittels Pumpen, der Zulauf bzw. die Menge der Precursorsole 3 und 4, die zur Lyogelherstellung bzw. -bildung miteinander gemischt werden, kontrolliert bzw. insbesondere dosiert werden.

Die Dosierung der Precursorzuläufe erfolgt dabei im Rahmen einer weiter bevorzugten Ausführung der vorliegenden Erfindung in Abhängigkeit des pH-Wertes der, insbesondere gemischten, Precursorsole 3 und 4. Hierbei hat es sich erfindungsgemäß bewährt, wenn die miteinander gemischten Precursorsole 3 und 4 einen pH-Wert in einem Bereich von pH 4,5 bis 9,5, insbesondere pH 5 bis pH 9, vorzugsweise pH 5,3 bis 8,5, aufweisen. Besonders gute Ergebnisse, insbesondere eine besonders genaue Kontrolle sowie Abstimmung der Lyogelbildung, können in Rahmen der vorliegenden Erfindung erzielt werden, wenn die miteinander gemischten Precursorsole 3 & 4 einen schwach sauren pH-Wert, insbesondere in einem Bereich von pH 4,5 bis 6,8, vorzugsweise pH 5 bis 6,5, oder einen schwach basischen pH-Wert, insbesondere in einem Bereich von pH 7,5 bis 9,5, vorzugsweise pH 7,8 bis 9, aufweisen. Hierbei ist es für das erfindungsgemäße Verfahren, insbesondere im Hinblick auf die im final erhaltenen Aerogel ausgebildeten Eigenschaften, ganz besonders bevorzugt, wenn die miteinander gemischten Precursorsole 3 und 4 einen schwach sauren pH-Wert im vorgenannten Bereich aufweisen.

Die Vorrichtung 1 weist vorzugsweise eine Mischeinrichtung 8 auf. In der Figurendarstellung ist die Mischeinrichtung beispielhaft in Form einer Mischstrecke dargestellt, welche insbesondere statische Mischelemente 9 enthält. Die Mischeinrichtung geht vorzugsweise in eine Einlassöffnung, bspw. insbesondere in Form einer Düse, über bzw. weist diese auf. In diesem Zusammenhang ist es möglich, dass die Mischeinrichtung eine Düse ist, d.h. dass die Precursorsole 3 und 4 in der Düse unmittelbar vor Einbringung in den Reaktor 2 gemischt werden. Bevorzugt wird es jedoch, wenn die gemischten Precursorsole 3 und 4 eine gewisse Zeit in der Mischeinrichtung 8 verbleiben, sodass eine vollständige Durchmischung der Precursorsole 3 und 4 gewährleistet wird und gegebenenfalls eine gewünschte Vorgelierung einsetzt. Die konkreten Mischparameter der Mischeinrichtung 8 sind dabei insbesondere von der Geometrie der Mischeinrichtung 8, der chemischen und physikalischen Beschaffenheit der Precursorsole 3 und 4 sowie der Form und der Eigenschaften der herzustellenden Aerogelpartikel abhängig.

Bevorzugt kann es hierbei weiterhin vorgesehen sein, dass die Zuläufe 5 über ein T-Stück mit der Mischeinrichtung 8 verbunden sind. In der Mischeinrichtung 8 erfolgt das Mischen der separat bereitgestellten sowie getrennt voneinander, insbesondere kontinuierlich, dosierten Precursorsole 3 und 4, wobei mittels der integrierten Mischelemente 9 eine vorzugsweise homogene und gleichmäßige Durchmischung erzielt werden kann. Unmittelbar im Anschluss an das Mischen der Precursorsole 3 und 4 erfolgen insbesondere simultan die Gelbildung sowie die, vorzugsweise tropfenweise, Einbringung, bevorzugt Eindüsung, der Precursorsole 3 und 4 über eine Einassöffnung 10, insbesondere eine Düse, in den Reaktor 2. Hierbei ist es ausgehend vor der Geometrie der Einlassöffnung 10, insbesondere der Düse, insbesondere möglich, auch die Form bzw. Geometrie der gebildeten Lyogelpartikel zu kontrollieren.

Unter Abstimmung der jeweils in die Mischeinrichtung 8 dosierten Mengen der Precursorsole 3 und 4 in Abhängigkeit von dem, insbesondere vorab festgelegten, pH-Wert für die gemischten Precursorlösungen wird mit Durchlaufen der Mischeinrichtung 8 sowie der statischen Mischelemente 9, vorzugsweise innerhalb einer Zeitspanne von weniger als 60 Sekunden, insbesondere weniger als 30 Sekunden, vorzugsweise weniger als 20 Sekunden, sowie mehr als 0,1 Sekunden, insbesondere mehr als 0,5 Sekunden, vorzugsweise mehr als 1 Sekunde, die Lyogelbildung initiiert. Hierbei ist insbesondere maßgeblich, dass auf Basis der gezielten pH-Wertabstimmung sowie der gleichmäßigen und kontrollierten homogenen Durchmischung der Precursorlösungen 3 und 4 in der Mischeinrichtung 8 verlässlich und prozesssicher, insbesondere sphärische, Lyogelpartikel 11 mit einer einheitlichen Größenverteilung sowie auch gezielt einstellbaren Größe erhalten werden können.

Im Rahmen der vorliegenden Erfindung ist es in diesem Zusammenhang weiterhin vorzugsweise vorgesehen, dass Herstellung des Lyogels 11 bei einem Druck von weniger als 40 bar, insbesondere weniger als 30 bar, vorzugsweise weniger als 20 bar, bevorzugt bei Atmosphärendruck, d.h. ca.1 bar, sowie bei Temperaturen oberhalb von 50 °C, insbesondere 60 °C, vorzugsweise 70 °C, bevorzugt 80 °C, durchgeführt wird. Außerdem hat es sich als vorteilhaft erwiesen, wenn im Reaktor 2 eine kontrollierten Gas-Atmosphäre, insbesondere einer CO₂-, N₂- oder Ar-Atmosphäre oder eine Atmosphäre aus einer Mischung dieser Gase, ausgebildet wird.

Die gebildeten Lyogelpartikel 11 sammeln sich am Boden des Reaktors 2, wobei die insbesondere sphärische Form jedoch insbesondere unbeeinträchtigt erhalten bleibt. Die Lyogelpartikel 11 können hier nun entweder aus dem Reaktor 2 entfernt oder im Reaktor weiterverarbeitet werden. Vorzugsweise wird nach Bildung des Lyogels 11 ein Lösemittelaustauch unter gleichzeitiger Hydrophobierung des Lyogels 11 mittels eines geeigneten organischen Lösungsmittels sowie eines Hydrophobierungsmittels, insbesondere eines Silanisierungsmittels, vorgenommen.

Lösemittel und Hydrophobierungsmittel werden über die Einlassöffnungen 12 bzw. 13 in den Reaktor 2 eingebracht. Hierbei wird es bevorzugt, wenn das organische Lösemittel im CO₂ löslich ist, um eine umschließende überkritische Trocknung mit CO₂ zu ermöglichen. Über die Einlassöffnungen 12 bzw. 13 können daher insbesondere auch Gase, wie beispielsweise CO₂, in den Reaktor eingebracht und gegebenenfalls auch wieder entfernt werden. Nach erfolgtem Lösemittelaustausch wird das Lyogel 11 getrocknet, insbesondere indem zuerst das Lösemittel durch die Auslassöffnung 14 abgelassen wird und anschließend eine überkritische Trocknung des Lyogels mittels CO₂ durchgeführt wird, so dass ein Aerogel erhalten wird.

Im Hinblick auf die Steuerung bzw. Regelung der Vorrichtung 1 zur Durchführung des erfindungsgemäßen Verfahrens wird es schließlich bevorzugt, wenn die Vorrichtung 1 Messeinrichtungen 15 aufweist, insbesondere wobei diese vorzugsweise zur Messung von Druck, Temperatur und/oder pH-Wert geeignet sind.

Der Gegenstand der vorliegenden Erfindung wird nachfolgend anhand von Ausführungsbeispielen in nicht beschränkender Weise erläutert:

### Ausführungsbeispiele

Es werden Silica-Aerogele aus Kieselsäuren als Precursoren mit dem erfindungsgemäßen Verfahren hergestellt und die erhaltenen Aerogelpartikel auf ihre Eigenschaften hin untersucht:

### 1. Herstellung der Aerogele

### Herstellung des sauren Precursorsols:

Zur Herstellung des sauer eingestellten Precursorsols wird Kieselsäure aus Natronwasserglas mittels Ionentausch gegen Protonen hergestellt. Der Feststoffgehalt wird auf 5 bis 10 Gew.% eingestellt, bevorzugt 7 bis 8 Gew.%.

Die so hergestellte Kieselsäure weist einen pH-Wert von 1,8 bis 2,4 auf vorzugsweise 2,0 auf. Zur Lagerung der Kieselsäure kann diese mittels HCI auf einen pH-Wert von pH 1 bis 1,5 stabilisiert werden.

### Herstellung des basischen Precursorsols:

Für die Herstellung des basischen Precursorsols wird zunächst wiederum Kieselsäure aus Natronwasserglas mittels Ionentausch erzeugt. Der Feststoffgehalt wird auf 5 bis 10 Gew.% eingestellt, bevorzugt 7 bis 8 Gew.%.

Der pH-Wert der Kieselsäure wird wenige Minuten vor Verwendung mittels Zugabe von NH₃ (c_{aq} 25%, ca. 4,5 g/100 g Lsg.) auf einen pH von 9 bis 11 eingestellt, vorzugsweise 10,5. Hierbei sind eine sehr schnelle Zugabe sowie ein sehr schnelles Einmischen der wässrigen NH₃-Lösung maßgeblich, um eine unmittelbare Gelierung zu verhindern.

Die Ammoniakzugabe beträgt 7,0 ml Ammoniak 25 Gew.% auf 100 g Kieselsäurelösung. Die Lagerdauer einer solchen Lösung beträgt üblicherweise nur wenige Stunden, vorzugsweise maximal 2 Stunden.

Alternativ können als basische Lösung auch kommerzielle Kieselsole eingesetzt werden. Hier eignen sich bspw. Ludox SM mit einem Feststoffgehalt von 30 Gew.% und einem pH-Wert von ca. 10, oder LUDOX AS- 40, welches einen niedrigeren Natriumgehalt aufweist, oder Mischungen aus diesen.

### Mischungsverhältnisse der Precursorsole zur Lyogelbildung:

In der nachfolgenden Tabelle sind die Mischungsverhältnisse, in denen die oben genannten Precursorsole im Rahmen des Verfahrens zur Bildung des Lyogels eingesetzt werden, aufgelistet.

**Tabelle 1: Massenbilanzen der zu mischenden Kieselsäurelösungen und die dazugehörige pH-Werte**

| **Basische Lösung Anteil [g]** | **Säure Lösung Anteil [g]** | **B/S Verhältnis** | **NH₃ Gew.- %** | **Erhaltener pH-Wert** |
|---|---|---|---|---|
| Kieselsäurelösung 7 Gew.%, pH 11 | Kieselsäurelösung 7 Gew.%,ca. pH 2 | | | |
| 3,50 | 50,0 | 0,070 | 0,39 | 5,75 |
| 3,75 | 50,0 | 0,075 | 0,41 | 6,11 |
| 4,00 | 50,0 | 0,080 | 0,45 | 6,55 |
| | | | | |

| Kieselsol LUDOX SM 7 Gew.%, pH 10,5 | Kieselsäurelösung 7 Gew.%, ca. pH 2 | | | |
|---|---|---|---|---|
| 10,0 | 50,0 | 0,20 | | 6,15 |
| | | | | |

| Kieselsol LUDOX SM 10 Gew.%, pH 9,1 | Kieselsäurelösung 7 Gew.%, pH 2 | | | |
|---|---|---|---|---|
| 25,0 | 50,0 | 0,50 | | 6,45 |

### Durchführung der Lyogel- und Aerogelbildung

Die wie oben beschrieben hergestellten Kieselsäurelösungen werden in einer geeigneten Vorrichtung, vorzugsweise über einen Zweistoffzulauf mittels T-Stück und nachfolgend einen statischen Mischer in Form eines Rohreinsatzes sowie unter Einsatz von zwei Pumpen, vermengt. Als statische Mischer sind insbesondere Modelle für dünnflüssige Systeme geeignet, z.B. mit einem Durchmesser:Längen-Verhältnis von 1:5, etwa nach "Kenics"-Bauweise. Die Gelierung erfolgt vorzugsweise unmittelbar beim Mischen der beiden Lösungen, sodass die gemischten Precursorlösungen bei resultierenden pH-Werten nahe dem neutralen Bereich mit kurzen Gelierzeiten vertropft werden können. Die gebildeten Lyogelpartikel, insbesondere Hydrogelpartikel, sammeln sich am Boden der Vorrichtung, vorzugsweise in Form sphärischer Partikel.

Da das in den Lyogelen bzw. insbesondere Hydrogelen befindliche Wasser den Trocknungsprozess zur Überführung in ein Aerogel stören würde, wird vorzugsweise gegen ein geeignetes, insbesondere CO₂-lösliches, Lösemittel, bspw. Ethanol, ausgetauscht. Der Lösemitteltausch erfolgt dazu bevorzugt bei einem Druck von ca. 1 bis 30 bar und Temperaturen zwischen 30°C und 150 °C. Das in der Reaktionsvorrichtung, insbesondere dem Autoklav, lagernde Gel wird mit dem Lösemittel, z.B. Ethanol, in flüssiger Form überschichtet. Der Autoklav wird dazu insbesondere mit Druck beaufschlagt, um ein Sieden des Lösemittels zu vermeiden, wobei für Ethanol der Dampfdruck von 5,6 bar bei 130 °C liegt, sodass hier eine Druckbeaufschlagung von 10 bar geeignet ist.

Weiterhin kann im Rahmen des Lösemittelaustausches auch eine Hydrophobierung des Lyogels vorgenommen werden. Hierzu erfolgt eine Überlagerung der Gele mit einem flüssigen Gemisch aus Ethanol und Hexamethyldisilazan (HDMZ), wobei die zeitgleiche Zugabe von HDMZ zu einer Hydrophobierung der Gele führt. Alternativ kann auch der ausschließliche Kontakt der Gele mit einer mit Ethanol gesättigten Gasphase zu einem hinreichenden Lösungsmitteltausch führen.

Nach einer Verweilzeit von 30 min wird das flüssige Ethanol aus dem Behälter abgelassen. Es können dann weitere Waschzyklen durch Zugabe von Ethanol in den Behälter folgen, wobei die Zielsetzung darin besteht, den Wassergehalt der Gele unter 10 Vol.% zu bringen. In diesem Fall erfolgt nach jeweils 20 min ein Austausch der Ethanolphase. Als besonders vorteilhaft hat es sich erwiesen, wenn der erste Lösemittelaustausch derart ausgeführt wird, dass die Gele mit der flüssigen Ethanolphase überschichtet werden.

Nach Ende des Lösemitteltausches, insbesondere wenn die Gele weniger als 5 Gew.% Wasser enthalten, können die Gelpartikel überkritisch getrocknet werden. Dazu erfolgt die Einspeisung von komprimiertem Kohlendioxid als Trocknungsfluid, wobei der Gasstrom zur gezielten kontinuierlichen Trocknung der Organogele genutzt und eine einstufige Aerogelpartikelerzeugung sichergestellt werden kann. Auf Basis der kugeligen Partikelform und einem typischen Partikeldurchmesser zwischen 1 und 6 mm kann die überkritische Trocknung in einem Zeitfenster von 10 bis 60 min bei einem Druck in einem Bereich von 120 bis 160 bar und einer Temperatur in einem Bereich von 60 bis 120 °C durchgeführt werden.

### 2. Charakterisierung der Aerogele

Die Charakterisierung der erfindungsgemäß erhaltenen Aerogele erfolgt, wie nachfolgend beschrieben wird:

### Partikelgrößen:

Zur Bestimmung der Größe der erhaltenen erfindungsgemäßen Aerogelpartikel wird die Methode der Siebanalyse verwendet. Kleinere Partikel im Größenbereich unter 1 mm werden zusätzlich Lichtmikroskopisch vermessen.

Die Partikelgrößenanalyse hat ergeben, dass erfindungsgemäße Aerogelpartikel Partikelgrößen im Bereich von 0,1 bis 10 mm, insbesondere 0,2 bis 8 mm, vorzugsweise 0,3 bis 7 mm, aufweisen.

### Wärmeleitfähigkeit:

Zur Bestimmung der Wärmeleitfähigkeit wird ein Gerät von C3 Prozess und Analysetechnik GmbH vom Typ Hot Disk mit einer Empfindlichkeit bis zu 0,005W / m*K eingesetzt. Der Hot Disk Sensor besteht hierbei aus einer Nickel-Doppelspirale, die sowohl als Heizquelle als auch zur Messung des Temperaturanstiegs während der Messung dient.

Für erfindungsgemäße Aerogele werden Wärmeleitfähigkeiten im Bereich von 0,012 bis 0,025 W/mK, insbesondere 0,013 bis 0,022 W/mK, vorzugsweise 0,014 bis 0,020 W/mK, gemessen.

### Porenvolumen und Dichte:

Zur Bestimmung der Dichte und des Porenvolumens wurden Untersuchungen mittels Quecksilber-Porosimetrie durchgeführt. Hierbei wird die Probe mit bis zu 400 MPa Druck beaufschlagt, was die Probe zwar zerstört, dadurch aber auch eine vollständige Detektion des inneren Porenvolumens ermöglicht.

Als Referenz dient kommerziell erhältliches, unterkritisch getrocknetes und hydrophobiertes Aerogel Enova P300 (Cabot Corporation, mittlere Dichte lt. Datenblatt ca. 150 kg/m³) sowie das Aerogel Enova 3110 (Cabot Corporation).

Die Dichte von erfindungsgemäßen Aerogelpartikel liegt entsprechend den Ergebnissen der Quecksilber-Porosimetrie in einem Bereich von 0,01 bis 0,60 g/cm³, insbesondere 0,11 bis 0,55 g/cm³, vorzugsweise 0,12 bis 0,50 g/cm³,

### Porosität, BET Oberfläche und mittlerer Porenradius

Zur Bestimmung der Porosität, der BET-Oberfläche und des mittleren Porenradius der erfindungsgemäßen Aerogele wurde die Stickstoffadsorption der Aerogele nach dem BET verfahren gemessen bzw. bestimmt. Die Messung erfolgt dazu im Allgemeinen gemäß DIN ISO 9277:2003-05 ("Bestimmung der spezifischen Oberfläche von Feststoffen durch Gasadsorption nach dem BET-Verfahren").

Nach der vorgenannten Methode ergeben sich für erfindungsgemäße Aerogele Werte für die Porosität von 94 bis 99,5 %, insbesondere 95 bis 99 %, vorzugsweise 96 bis 98 %. Weiterhin weisen die Aerogele eine BET-Oberfläche im Bereich von 500 bis 1.000 m²/g, insbesondere 600 bis 1.050 m²/g, vorzugsweise 650 bis 1.000 m²/g, auf.

### Bezugszeichenliste:

- 1: Vorrichtung
- 2: Reaktor
- 3: Precursorsol
- 4.: Precursorsol
- 5.: Zulauf
- 6.: Ventil
- 7.: Dosiereinrichtung
- 8.: Mischeinrichtung
- 9.: Statische Mischelemente
- 10.: Einlassöffnung
- 11.: Lyogelpartikel
- 12.: Einlassöffnung
- 13.: Einlassöffnung
- 14.: Auslassöffnung
- 15.: Messeinrichtung

## Patentansprüche

1. Verfahren zur Herstellung eines Silica-Aerogels mittels eines Sol-Gel-Verfahrens, wobei zunächst ein Lyogel gebildet und das Lyogel anschließend in ein Aerogel überführt wird,
**dadurch gekennzeichnet,**
**dass** für die Bildung des Lyogels mindestens zwei Precursorsole, vorzugsweise zwei Precursorsole, miteinandergemischt werden, wobei ein erstes Precursorsol einen sauren pH-Wert oder einen basischen pH-Wert aufweist und ein zweites Precursorsole einen von dem ersten Precursorsol unterschiedlichen pH-Wert aufweist.

2. Verfahren nach Anspruch 1, **dadurch gekennzeichnet, dass** die Precursorsole miteinander gemischt und in eine Reaktionsvorrichtung eingebracht werden.

3. Verfahren nach Anspruch 1 oder 2, **dadurch gekennzeichnet, dass** die Precursorsole für die Bildung des Lyogels kontinuierlich miteinandergemischt werden, insbesondere mittels eines Zulaufsystems, vorzugsweise mittels eines Zweistoffzulaufs.

4. Verfahren nacheinem der Ansprüche 1 bis 3, **dadurch gekennzeichnet, dass** die Precursorsole voneinander getrennt bereitgestellt werden.

5. Verfahren nacheinem der Ansprüche 1 bis 4, **dadurch gekennzeichnet, dass** das erste Precursorsol einen sauren pH-Wert aufweist und das zweite Precursorsole einen basischen pH-Wert aufweist.

6. Verfahren nach einem der Ansprüche 1 bis 5, **dadurch gekennzeichnet, dass** der saure pH-Wert in einem Bereich von pH 0 bis 6, insbesondere pH 1 bis 4, vorzugsweise pH 1,5 bis 2,5, liegt.

7. Verfahren nach einem der Ansprüche 1 bis 6, **dadurch gekennzeichnet, dass** der basische pH-Wert in einem Bereich von pH 7 bis 13, insbesondere pH 8 bis 12, vorzugsweise pH 9 bis 11, liegt.

8. Verfahren nach einem der Ansprüche 1 bis 7, **dadurch gekennzeichnet, dass** die miteinandergemischten Precursorsole einen pH-Wert in einem Bereich von pH 4,5 bis 9,5, insbesondere pH 5 bis pH 9, vorzugsweise pH 5,3 bis 8,5, aufweisen.

9. Verfahren nach Anspruch 8, **dadurch gekennzeichnet, dass** die miteinander gemischten Precursorsole einen schwach sauren pH-Wert, insbesondere in einem Bereich von pH 4,5 bis 6,8,vorzugsweise pH 5 bis 6,5, oder einen schwach basischen pH-Wert, insbesondere in einem Bereich von pH 7,5 bis 9,5, vorzugsweise pH 7,8 bis 9, aufweisen.

10. Verfahren nach einem der Ansprüche1 bis 9, **dadurch gekennzeichnet, dass** die Bildung des Lyogels bei einem Druck von weniger als 40 bar, insbesondere weniger als 30 bar, vorzugsweise weniger als 20 bar, bevorzugt weniger als 10 bar, ganz besonders bevorzugt bei Atmosphärendruck, durchgeführt wird.

11. Verfahren nach einem der Ansprüche 1 bis 10, **dadurch gekennzeichnet, dass** die Precursorsole Silicium-basierte Precursor enthalten.

12. Verfahren nach Anspruch 11, **dadurch gekennzeichnet, dass** die Precursorsole Silicium in Mengen in einem Bereich von 3 bis 20 Gew.%, insbesondere 4 bis 15 Gew.%, vorzugsweise 5 bis 10 Gew.%, bezogen auf Precursorsole, enthalten.

13. Verfahren nach einem der Ansprüche 11 oder 12, **dadurch gekennzeichnet, dass** die Precursor ausgewählt sind aus der Gruppe von Kieselsäuren, insbesondere kolloidaler Kieselsäure, Kieselsolen, Silikasolen, Silanen, insbesondere Tetraalkoxysilanen, Siloxanen, Silikaten und deren Mischungen.

14. Silica-Aerogel, erhältlich nach einem Verfahren gemäß der vorangehenden Ansprüche, **dadurch gekennzeichnet, dass** das Silica-Aerogel in Form von Partikeln mit kreisförmigen Querschnitt vorliegt und dass das Silica-Aerogel Partikelgrößen im Bereich von 0,1 bis 10 mm aufweist.

15. Silica-Aerogel nach Anspruch 14, **dadurch gekennzeichnet, dass** das Silica-Aerogel Partikelgrößen im Bereich von 0,2 bis 8 mm, vorzugsweise 0,3 bis 7 mm, bevorzugt 0,5 bis 5 mm, aufweist.

16. Verwendung eines Silica-Aerogels nach einem der Ansprüche 14 oder 15 zu Isolationszwecken, insbesondere zur Schallisolierung, elektrischen Isolierung oder Wärmeisolierung, insbesondere zur Wärmedämmung, oder als Trägermaterial, als Absorptionsmittel oder als Adsorptionsmittel.

17. Verwendung eines Silica-Aerogels nach einem der Ansprüche 14 oder 15 zu Dämmzwecken, insbesondere als oder in Wärmedämmungen.

## Claims

1. Method for the production of a silica aerogel by means of a sol-gel process, wherein a lyogel is first formed and the lyogel is then converted into an aerogel,
**characterized in that**
for producing the lyogel at least two precursor sols, preferably two precursor sols, are mixed with each other, a first precursor sol having an acidic pH or a basic pH and a second precursor sol having a pH different from the first precursor sol.

2. Method according to claim 1, **characterized in that** the precursor sols are mixed with one another and are supplied into a reaction apparatus.

3. Method according to claim 1 or 2, **characterized in that** the precursor sols for producing the lyogel are continuously mixed with each other, in particular by means of a feed system, preferably by means of a two-substance feed.

4. Method according to any one of claims 1 to 3, **characterized in that** the precursor sols are provided separately from one another.

5. Method according to any one of claims 1 to 4, **characterized in that** the first precursor sol has an acidic pH and the second precursor sol has a basic pH.

6. Method according to one of claims 1 to 5, **characterized in that** the acidic pH is in a range from pH 0 to 6, in particular pH 1 to 4, preferably pH 1.5 to 2.5.

7. Method according to one of claims 1 to 6, **characterized in that** the basic pH is in a range from pH 7 to 13, in particular pH 8 to 12, preferably pH 9 to 11.

8. Method according to one of claims 1 to 7, **characterized in that** the precursor sols mixed together have a pH value in a range from pH 4.5 to 9.5, in particular pH 5 to pH 9, preferably pH 5.3 to 8.5.

9. Method according to claim 8, **characterized in that** the precursor sols mixed with each other have a weakly acidic pH, in particular in a range from pH 4.5 to 6.8, preferably pH 5 to 6.5, or a weakly basic pH, in particular in a range from pH 7.5 to 9.5, preferably pH 7.8 to 9.

10. Method according to one of claims 1 to 9, **characterized in that** the production of the lyogel is carried out at a pressure of less than 40 bar, in particular less than 30 bar, preferably less than 20 bar, preferably less than 10 bar, most preferably at atmospheric pressure.

11. Method according to any one of claims 1 to 10, **characterized in that** the precursor sols contain silicon-based precursors.

12. Method according to claim 11, **characterized in that** the precursor sols contain silicon in quantities in amounts in a range from 3 to 20% by weight, in particular from 4 to 15% by weight, preferably from 5 to 10% by weight, based on precursor sols.

13. Method according to one of claims 11 or 12, **characterized in that** the precursors are selected from the group of silicic acids, in particular colloidal silicic acid, silica sols, silicid acid sols, silanes, in particular tetraalkoxysilanes, siloxanes, silicates and mixtures thereof.

14. Silica aerogel obtainable by a method according to the preceding claims, **characterized in that** the silica aerogel is in the form of particles with a circular cross-section and **in that** the silica aerogel has particle sizes in the range from 0.1 to 10 mm.

15. Silica aerogel according to claim 14, **characterized in that** the silica aerogel has particle sizes in the range from 0.2 to 8 mm, preferably 0.3 to 7 mm, preferably 0.5 to 5 mm.

16. Use of a silica aerogel according to one of claims 14 or 15 for insulation purposes, in particular for sound insulation, electrical insulation or thermal insulation, in particular for thermal insulation, or as a carrier material, as an absorbent or as an adsorbent.

17. Use of a silica aerogel according to any one of claims 14 or 15 for insulating purposes, in particular as or in thermal insulation.

## Revendications

1. Procédé de préparation d'un aérogel de silice au moyen d'un procédé sol-gel, dans lequel un lyogel est d'abord formé et le lyogel est ensuite transformé en un aérogel,
**caractérisé en ce que**
**en ce que**, pour la formation du lyogel, au moins deux sols précurseurs, de préférence deux sols précurseurs, sont mélangés entre eux, un premier sol précurseur présentant une valeur de pH acide ou une valeur de pH basique et un deuxième sol précurseur présentant une valeur de pH différente de celle du premier sol précurseur.

2. Procédé selon la revendication 1, **caractérisé en ce que** les sols précurseurs sont mélangés entre eux et introduits dans un dispositif de réaction.

3. Procédé selon la revendication 1 ou 2, **caractérisé en ce que** les sols précurseurs pour la formation du lyogel sont mélangés ensemble en continu, en particulier au moyen d'un système d'alimentation, de préférence au moyen d'une alimentation à deux substances.

4. Procédé selon l'une des revendications 1 à 3, **caractérisé en ce que** les sols précurseurs sont préparés séparément les uns des autres.

5. Procédé selon l'une quelconque des revendications 1 à 4, **caractérisé en ce que** le premier sol précurseur présente un pH acide et le second sol précurseur présente un pH basique.

6. Procédé selon l'une quelconque des revendications 1 à 5, **caractérisé en ce que** le pH acide est compris dans une plage de pH 0 à 6, en particulier de pH 1 à 4, de préférence de pH 1,5 à 2,5.

7. Procédé selon l'une quelconque des revendications 1 à 6, **caractérisé en ce que** le pH basique est compris dans une plage de pH 7 à 13, en particulier de pH 8 à 12, de préférence de pH 9 à 11.

8. Procédé selon l'une des revendications 1 à 7, **caractérisé en ce que** les sols précurseurs mélangés entre eux présentent un pH dans une plage de pH 4,5 à 9,5, en particulier de pH 5 à pH 9, de préférence de pH 5,3 à 8,5.

9. Procédé selon la revendication 8, **caractérisé en ce que** les sols précurseurs mélangés entre eux présentent un pH faiblement acide, en particulier dans une plage de pH 4,5 à 6,8,de préférence de pH 5 à 6,5, ou un pH faiblement basique, en particulier dans une plage de pH 7,5 à 9,5, de préférence de pH 7,8 à 9.

10. Procédé selon l'une quelconque des revendications 1 à 9, **caractérisé en ce que** la formation du lyogel est réalisée à une pression inférieure à 40 bars, notamment inférieure à 30 bars, de préférence inférieure à 20 bars, de préférence inférieure à 10 bars, de manière tout à fait préférée à la pression atmosphérique.

11. Procédé selon l'une quelconque des revendications 1 à 10, **caractérisé en ce que** les sols précurseurs contiennent des précurseurs à base de silicium.

12. Procédé selon la revendication 11, **caractérisé en ce que** les sols précurseurs contiennent du silicium en quantités dans une plage de 3 à 20 % en poids, en particulier de 4 à 15 % en poids, de préférence de 5 à 10 % en poids, par rapport aux sols précurseurs.

13. Procédé selon l'une des revendications 11 ou 12, **caractérisé en ce que** les précurseurs sont choisis dans le groupe constitué par les silices, en particulier la silice colloïdale, les sols de silice, les silicasols, les silanes, en particulier les tétraalcoxysilanes, les siloxanes, les silicates et leurs mélanges.

14. Aérogel de silice pouvant être obtenu par un procédé selon les revendications précédentes, **caractérisé en ce que** l'aérogel de silice se présente sous la forme de particules de section circulaire et **en ce que** l'aérogel de silice présente des tailles de particules comprises entre 0,1 et 10 mm.

15. Aérogel de silice selon la revendication 14, **caractérisé en ce que** l'aérogel de silice présente des tailles de particules dans la plage de 0,2 à 8 mm, de préférence de 0,3 à 7 mm, de préférence de 0,5 à 5 mm.

16. Utilisation d'un aérogel de silice selon l'une des revendications 14 ou 15 à des fins d'isolation, notamment phonique, électrique ou thermique, en particulier d'isolation thermique, ou comme matériau support, comme agent absorbant ou comme agent adsorbant.

17. Utilisation d'un aérogel de silice selon l'une des revendications 14 ou 15 à des fins d'isolation, notamment comme ou dans des isolants thermiques.
